(19) **Europäisches Patentamt**
**European Patent Office**
**Office européen des brevets**

(11) **EP 1 914 952 B1**

(12) **EUROPEAN PATENT SPECIFICATION**

(45) Date of publication and mention
of the grant of the patent:
**08.06.2016 Bulletin 2016/23**

(51) Int Cl.:
**H04W 52/28** *(2009.01)*  **H04W 80/06** *(2009.01)*

(21) Application number: **06021752.8**

(22) Date of filing: **17.10.2006**

(54) **METHOD AND COMMUNICATION SYSTEM FOR TRANSMISSION POWER ADAPTATION AND TCP THROUGHPUT OPTIMIZATION IN A WIRELESS NETWORK**

VERFAHREN UND KOMMUNIKATIONSSYSTEM ZUR LEISTUNGSANPASSUNG UND OPTIMIERUNG DES TCP-DURCHSATZES IN EINEM DRAHTLOSEN NEZTWERK

PROCÉDÉ ET SYSTÈME POUR ADAPTATION DE PUISSANCE ET OPTIMIZATION DU DÉBIT DE MESSAGES TCP DANS UN RÉSEAU SANS FIL

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**23.04.2008 Bulletin 2008/17**

(73) Proprietor: **Deutsche Telekom AG**
**53113 Bonn (DE)**

(72) Inventor: **Jatinder, Pal Singh**
**Mountain View,**
**CA 94040 (US)**

(74) Representative: **Blumbach Zinngrebe**
**Patentanwälte**
**Alexandrastrasse 5**
**65187 Wiesbaden (DE)**

(56) References cited:
**WO-A1-2005/025084**

- **SINGH J P ET AL: "Channel state awareness based transmission power adaptation for efficient TCP dynamics in wireless networks" COMMUNICATIONS, 2005. ICC 2005. 2005 IEEE INTERNATIONAL CONFERENCE ON SEOUL, KOREA 16-20 MAY 2005, PISCATAWAY, NJ, USA,IEEE, 16 May 2005 (2005-05-16), pages 3553-3559, XP010825917 ISBN: 0-7803-8938-7**
- **H S WANG, N MOAYERI: "Finite State Markov Channel - A Useful Model for Radio Communication Channels" IEEE TRANSACTIONS ON VEHICULAR TECHNOLOGIE, [Online] vol. 44, no. 1, 1 February 1995 (1995-02-01), pages 163-171, XP002424425 Retrieved from the Internet: URL:http://tango.isti.cnr.it/docs/wichita/ WangFiniteMarkovChannel.pdf> [retrieved on 2007-03-13]**
- **FRIDERIKOS V ET AL: "TCP-aware power and rate adaptation in DS/CDMA networks" IEE PROCEEDINGS : COMMUNICATIONS, INSTITUTION OF ELECTRICAL ENGINEERS, GB, vol. 151, no. 6, 27 August 2004 (2004-08-27), pages 581-588, XP006023108 ISSN: 1350-2425**

**Description**

**Field of the Invention**

The present invention is generally based on an optimization methodology that captures the trade-off between TCP throughput and transmission power in a wireless network. The invention is directed, in particular, to a method and a communication system for evaluating and performing transmission power adaptation based on the TCP dynamics of a TCP data flow and observed wireless channel conditions.

**Background of the Invention**

A predominant proportion of the Internet traffic today is carried by TCP (Transmission Control Protocol). The use of TCP as a transport layer protocol in wireless networks is thus necessitated owing to a proliferating interest in mobile access to the Internet and the need for integration of mobile devices with a wired network. However, TCP has been known to result in a low end to end throughput performance in a wireless scenario owing to its perception of the losses on the wireless link as an indication of congestion and invocation of TCP congestion control mechanisms at the TCP source side. Several solutions have been proposed to address the problem.

**From** WO 2005/025084 A1 **a method for block error ratio management of radio bearers for TCP traffic is known, which helps TCP to accelerate during its initial slow start phase or during congestion control, wherein the block error ration target is set low to help TCP to accelerate until the maximum bit rate of the radio bearer has been reached and then the block error ratio target is set to a high value.**

One category of proposals includes adaptation of TCP to the wireless scenario via identification of non-congestion losses and prevention of the invocation of TCP congestion control procedures in response to these losses. These approaches have been discussed, for example, in Balakrishnan et al., "A Comparison of Mechanisms for Improving TCP Performance over Wireless Links," IEEE/ACM Transactions on Networking, 1998, and Arauz et al., "MAITE: A Scheme for Improving the Performance of TCP over Wireless Channels," IEEE Vehicular Technology Conference, 2001. However, such solutions require a change in protocol dynamics of TCP and the Internet wide deployment of such measures is practically infeasible.

Another category of approaches as suggested, for example, in Miyoshi et al., "Performance Evaluation of TCP Throughput on Wireless Cellular Networks," IEEE Vehicular Technology Conference, 2001, attempt to hide non congestion losses from the TCP sender, and aim to enhance the wireless link quality as seen by transport layer by making the link layer more reliable. However, such measures are known to be unable to efficiently shield TCP from the wireless losses and also result in high rate and delay variability.

The split connection approach suggested in Brown et al., "M-TCP: TCP for Mobile Cellular Networks," ACM SIGCOMM Computer Communications Review, 1997, attempts to split the end-to-end TCP connection by creating a new TCP connection over the wireless link. The drawback of the strategy is the violation the end-to-end semantics of the protocol and overhead increase caused by the creation of the additional TCP connection.

The SNOOP protocol suggested in Balakrishnan et al., "Improving TCP/IP Performance over Wireless Networks," ACM MobiCom, 1995, represents a TCP dynamics aware link-layer design, but has its share of limitations. It cannot be used for the case when the TCP data and ACKs do not both traverse through the same base station BS or access point AP, and when the TCP headers of TCP data packets are encrypted.

The link-layer mechanisms like power control and link-adaptation have become widely deployed in wireless networks but their potential to enhance TCP throughput has remained largely unexplored. Recent related attempts including, for example, Laura et al., "An Analytical Study of a Trade-off between Transmission Power and FEC for TCP Optimization in Wireless Networks," IEEE INFOCOM 2003 and Barman et al., TCP Optimization through FEC, ARQ, and Transmission Power Trade-offs, "International Conference on Wired/Wireless Internet Communications, 2004, target maximization of an objective function which depends on a generic TCP throughput expression. The throughput is a taken to be a function of the average round trip time and TCP segment loss probability. However, such a TCP throughput characterization having dependence on wireless channel conditions only via segment error rate may not completely capture the TCP dynamics as influenced by the underlying wireless channel effects like shadowing and multipath fading. Moreover, these works do not concretely specify any framework or system for power control measures for optimization of TCP throughput over a wireless access technology.

In "Channel state awareness based transmission power adaptation for efficient TCP dynamics in wireless networks", 2005 IEEE International Conference on Communications in Seoul, Korea, 16-20 May 2005**,** Singh et al. proposed a concept concerning cross-layer optimization approaches for enhancing the throughput of TCP via adaptive power control. In this concept, the TCP congestion control dynamics of a bulk transfer TCP flow has been modelled and throughput optimizing power control measures has been evaluated by employing dynamic programming principles. While the work discusses the theory behind dynamic programming based optimization, it does not suggest any framework, method, or system design to dynamically evaluate power control measures in a real wireless system.

The present invention delineates a cross-layer approach that solves the TCP throughput degradation problem in a wireless network by adapting transmission power on a dynamically varying wireless link in accordance with TCP dynamics. Power control measures are getting increasingly deployed in wireless networks and are crucial because of concerns like interference mitigation and battery power conservation.

## Summary of the Invention

It is an object of the present invention to add to the existing approaches a further method and communication system to improve the throughput of a TCP flow in a wireless network.

It is an aspect of the invention to specify a method and system for solving a cross-layer TCP throughput optimization framework via dynamic programming, evaluating heuristics for power control, and exercising TCP's congestion control dynamics aware and wireless channel conditions based transmission power adaptation for optimizing TCP throughput in wireless networks.

It is a further aspect of the invention to teach exemplary embodiments for slow and fast fading wireless channels.

An exemplary method and communication system uses the modelling and characterization of the congestion avoidance behaviour of a predetermined TCP transmission cycle vis-à-vis the channel conditions and transmission power levels on the wireless link. In particular, a dynamic programming based optimization framework accounting for the dynamics of a bulk transfer TCP flow and the wireless channel model is employed. Accordingly, an exemplary method of the present invention can be used to ascertain the power at which TCP data packets or segments should be sent on the wireless link of a TCP connection to optimize the end-to-end throughput.

The above mentioned technical problem is solved by the steps of claim 1.

Therefore, a method is provided for optimizing the throughput of a flow of TCP segments being transferred from a TCP source to a TCP destination over a transmission path which comprises a wireless link between a wireless transmitter and a wireless receiver.

In step a) at least one current TCP congestion control parameter of a TCP congestion control algorithm used by the TCP source to transmit at least one TCP segment is determined at the transport layer of the TCP source. The TCP congestion control parameter includes, for example the round number and a phase information for a TCP segment to be transmitted. The phase information corresponds to the congestion window evolution pattern as the TCP source follows a congestion control algorithm. For example, additive increase and timeout phases can prevail as the TCP source follows congestion avoidance algorithm. In step b) the current channel condition of the wireless link for at least one TCP segment to be transmitted by the wireless transmitter is determined at the data link layer of the wireless transmitter. The channel condition is given, for example, by the signal-to-noise ratio (SNR), the channel gain which is based on the SNR, or the bit error rate (BER) which can be determined in a well known manner. In step c) the at least one current TCP congestion control parameter is transmitted from the transport layer of the TCP source to the data link layer of the wireless transmitter. This procedure reflects a cross-layer operation. In response to the at least one TCP congestion control parameter and the current channel condition of the wireless link the transmission power level, at which at least one data link layer frame containing at least a portion of a TCP segment is to be transmitted over the wireless link to the wireless receiver, is determined at the data link layer of the wireless transmitter such that the TCP throughput over the wireless link is optimized.

According to an exemplary embodiment
a TCP congestion control algorithm controls a TCP congestion window size during a TCP transmission cycles. Each TCP transmission cycle is defined by a number of rounds and an initial window size, wherein the TCP congestion control parameter includes the current round number and an information of the current phase of the TCP transmission cycle. Step d) comprises the step of updating a predetermined wireless channel model in response to the current wireless channel condition determined in step b). In this embodiment step d) further comprises the steps of:

d1) Evaluating a set of transmission power levels as a function of the round number, the initial window size and the phase of a TCP transmission cycle by executing a TCP throughput optimization algorithm on the basis of the updated wireless channel model;
d2) Storing the evaluated set of transmission power levels, the round numbers, the initial window size, the phase and the wireless channel condition; and
d3) Selecting the transmission power level in response to the current TCP congestion control parameters and the current channel condition.

In particular, the TCP congestion control algorithm is the TCP congestion avoidance algorithm and the TCP transmission cycle includes a additive increase and a timeout phase.

In order to effectively solve the TCP throughput optimization algorithm a finite-period dynamic programming procedure is used. In this case step d1) comprises the following steps:

- determining for each round of a TCP transmission cycle the target success probability for TCP segments to be transmitted during the respective round by minimizing a predetermined cost-to-go function for each round of a TCP transmission cycle and
- converting each target success probability to the corresponding transmission power level and
- transmitting the data link layer frame containing at least a portion of a TCP segment over the wireless link to the wireless receiver, thereby optimizing the end-to-end TCP throughput.

In order to evaluate transmission power levels which are suitable for a real scenario each target success probability is converted to the corresponding transmission power level by utilising physical layer and data link layer parameters of the wireless transmitter.

An N-state Markovian model is used as a wireless channel model, wherein each of the N states represents a channel gain factor of the wireless channel model.

According to yet another exemplary embodiment, power control measures are specified for optimizing the TCP throughput where the wireless channel fading decorrelates over the Round Trip Time (RTT) of the TCP connection. Consequently, an embodiment of the present invention can be used for enhancing the TCP throughput for slow fading, low mobility scenarios like pedestrians and stationary wireless access. A slow fading behaviour of a wireless channel is considered in the wireless channel model by setting the channel gain factor to the same value during each round of a TCP cycle.

According to a further exemplary embodiment, power control measures are specified for optimizing the TCP throughput where the wireless channel fading decorrelates over a frame transmission duration. Consequently, an embodiment of the present invention can be used for enhancing the TCP throughput for fast fading, high mobility scenarios like moving vehicles and trains. This is achieved by evaluating a transmission power cost averaged over a channel gain distribution to be used in the wireless channel model.

In particular, steps a) to d) are performed every time a data link layer frame containing at least a portion of a TCP segment is to be transmitted.

In stead of executing a TCP throughput optimization algorithm online a plurality of different wireless channel models and TCP transmission cycles can be stored. A set of transmission power levels for data link layer frames each containing at least a portion of a TCP segment are evaluated for each wireless channel model and for each TCP transmission cycle by executing a TCP throughput optimization algorithm. The sets of transmission power levels are then stored associated with the respective wireless channel model and TCP transmission cycle. A currently used wireless channel model is updated in response to the current wireless channel condition determined in step b). Next, a set of transmission power levels is selected in response to the updated wireless channel model. In response to the current TCP congestion control parameters and the current channel condition of the wireless link, the transmission power level at which the data link-layer frame containing at least a portion of a TCP segment is to be transmitted over the wireless link to the wireless receiver such that the end-to-end TCP throughput is optimized is selected from the set of transmission power levels.

In order to save computation performance a plurality of different wireless channel models are provided for, wherein for each wireless channel model a power control heuristics is predetermined and stored. Step d) comprises the following steps:

- Updating a predetermined wireless channel model in response to the current wireless channel condition determined in step b),
- selecting in response to the updated wireless channel model the corresponding heuristic, and
- evaluating in response to the current TCP congestion control parameters and the current channel condition of the wireless link the selected heuristic to obtain the transmission power level at which the data link-layer frame containing at least a portion of a TCP segment is to be transmitted over the wireless link to the wireless receiver such that the TCP throughput is optimized.

According to an exemplary method the transmission path comprises a wired path, wherein the TCP source is the wireless transmitter, e. g. a mobile device, the wireless receiver is a base station or an access point and the TCP destination, for example an Internet host, terminates the wired path. This method specifies the transmission power level at which the wireless transmitter should transmit TCP data to optimize the uplink throughput of a TCP connection between the wireless transmitter and an Internet host as the TCP destination. Consequently, an embodiment of the present invention may be used for improving the uplink speed for Internet based applications, web browsing, file transfers and alike, in mobile devices. Such an embodiment may include, for example, tunnelling of TCP dynamics information by the transport layer down to the data link layer of the wireless transmitter, parsing of this information by the data link-layer, solution of the TCP throughput optimization algorithm based on observed channel conditions or reference of predetermined heuristics obtained by offline solutions of the optimization framework, and determination of transmission power level at which a data link frame is to be transmitted by the physical layer.

In an alternative embodiment the TCP source terminates the wired path, the wireless receiver is a mobile device and the wireless transmitter is a base station or an access point, wherein the current TCP congestion control parameters determined by the TCP source in step a) are transmitted to the data link layer of the wireless transmitter.

In this case the method ascertains the transmission power level at which a base station (BS) or an access point (AP) should transmit data to optimize the downlink throughput of the transmission path or TCP connection between, for example, an Internet host and a mobile device. Consequently, an embodiment of the present invention may be used for improving the download speed for Internet applications in mobile devices. Such an embodiment may include transfer by the Internet host of TCP dynamics information to the data link-layer of a base station or access point, reference at the base station or access point to online or heuristics based solution for determination of power level at which data should to be transmitted by the link layer, and exercising of TCP dynamics aware power adaptation by the base station or access point for optimization of TCP throughput.

The wired path may belong to the Internet or a local area network like Ethernet and the wireless link may be part of a mobile network or a wireless local area network.

Therefore, the present invention may be used by network operators providing data services via the cellular wireless access technologies like, for example, UMTS and EGPRS. The web download speed for clients subscribed to a wireless Internet Service Provider can be sufficiently improved by exercising TCP dynamics aware power control measures at the base stations. Similarly the uplink speed of Internet can be improved via suitable power control at user devices. In another embodiment, the present invention may also be used for enhancing TCP performance in wireless local area networks based on IEEE 802.11 technologies thereby improving, for example, the user wireless access experience in hotspots like train stations, restraints, cafes. The IEEE 802.11 compliant access points and user devices would in this case exercise TCP dynamics aware power adaptation methods suggested in this invention.

The above mention technical problem is further solved by a communication system for optimizing the throughput of a flow of TCP segments being transferred from a TCP source to a TCP destination over a transmission path which comprises a wireless link between a wireless transmitter and a wireless receiver. The wireless transmitter comprising:

a physical layer adapted to receive over said wireless link information of the current channel condition of the wireless link ,
first storage means for storing a predefined wireless channel model,
second storage means for storing at least one current TCP congestion control parameter of a TCP congestion control algorithm used by the TCP source to transmit at least one TCP segment,
updating means adapted to update the wireless channel model in response to the information of the current channel condition of the wireless link and
determination means adapted to determine in response to the at least one TCP congestion control parameter and the current channel condition of the wireless link the transmission power level, at which at least one data link layer frame containing at least a portion of a TCP segment is to be transmitted over the wireless link to the wireless receiver, such that the end-to-end TCP throughput is optimized.

In an exemplary embodiment the TCP connection comprises a wired path. The TCP source is connected to the wired path. The wireless receiver is a mobile device, whereas the wireless transmitter is a base station or an access point. The TCP source is adapted to transmit the at least one current TCP congestion control parameter embedded in a predetermined packet to the wireless transmitter. It is to be noted, that the packet may or may not be a part of a TCP segment. In addition assessment means are provided to obtain the at least one current TCP congestion control parameter from the packet and to forward the parameter to the second storage means. This embodiment is adapted to optimize the downlink throughput of the TCP connection.

Furthermore, the wireless transmitter may comprise data processing means adapted to perform a TCP throughput optimization algorithm on the basis of the updated wireless channel model to evaluate a set of transmission power levels as a function of the round number, the phase and the initial window size of a predefined TCP transmission cycle and which is further adapted to store the set of transmission power levels in a third storage means.

In a alternative embodiment, the wireless transmitter comprises a fourth storage means for storing a plurality of look up tables of transmission power levels each generated with respect to a separate predefined wireless channel model. The updating means is adapted to select a look up table of transmission power levels in response to the current wireless channel model. The determination means is adapted to determine in response to the at least one TCP congestion control parameter and the current channel condition of the wireless link the transmission power level from the selected look up table. This embodiment helps to reduce the computation time with respect to an embodiment which uses dynamic programming solutions.

A further embodiment which needs less computation time comprises a wireless transmitter including fourth storage means for storing a plurality of predefined transmission power control functions which approximate the target segment success probabilities obtained by minimizing a predetermined cost-to-go-function. Each transmission power control function is generated with respect to a separate wireless channel model. The updating means is adapted to select a stored transmission power control function in response to the current wireless channel model. The determination means is adapted to evaluate in response to the at least one TCP congestion control parameter, the current channel condition of the wireless link and the selected transmission power control function the transmission power level.

The wireless channel model stored in the first storage means may represent slow fading and fast fading behaviour of a wireless link.

In addition, the physical layer of the wireless transmitter is adapted to transmit at least one data link layer frame at the determined transmission power level over the wireless link to the wireless receiver.

The technical problem of the present invention is also solved by a storage medium having stored a set of instructions therein, the set of instructions being executable by a control unit to perform a method according to any one of the claims 1 to 15.

In particular, the storage medium is implemented in a wireless transmitter for use with a communication system according to any one of the claims 16 to 21.


**Brief Description of the Drawings**

The invention, together with its objects and the advantages thereof, may be best understood by reference to the following description taken in conjunction with the accompanying drawings in which:

Fig. 1      shows a scenario with uplink and downlink TCP connections between mobile hosts and the Internet,

Fig. 2      shows the TCP segment transmission dynamics during a TCP cycle,

Fig. 3      shows a method to evaluate for the slow channel variation case, the cost, starting from a given round, of a TCP cycle as a function of channel gain and target segment success probability,

Fig. 4      shows an exemplary method to evaluate for the slow channel variation case, the optimal cost of a TCP cycle starting from a given round,

Fig. 5      shows an exemplary method to evaluate as a function of target segment success probability and channel gain, the cost of the timeout phase starting from a given round, for a slow varying wireless channel,

Fig. 6      shown an exemplary method for the slow channel variation case, to evaluate optimal cost of the timeout phase of a cycle starting from round given round,

Fig. 7      shows an exemplary method to evaluate the target segment success probabilities for the rounds of the additive increase and timeout phases under different prevailing channel conditions,

Fig. 8      shows a method to evaluate for the fast channel variation case, the cost, starting from a given round, of a TCP cycle as a function of target segment success probability,

Fig. 9      shows an exemplary method to evaluate for the fast channel variation case, the optimal cost of a TCP cycle starting from a given round,

Fig. 10      shows an exemplary method to evaluate as a function of target segment success probability and channel gain, the cost of the timeout phase starting from a given round, for a fast varying wireless channel,

Fig. 11      shown an exemplary method for the fast channel variation case, to evaluate optimal cost of the timeout phase of a cycle starting from round given round,

Fig. 12      shows exemplary transport layer functionality for performing TCP dynamics aware power adaptation,

Fig. 13      shows exemplary link-layer functionality for assessing the transmission power levels to optimize TCP throughput,

Fig. 14      shows an exemplary method for generating power control look-up table at the device transmitting on the wireless link for optimizing TCP throughput via runtime solution of dynamic programming based optimization,

Fig. 15      shows an exemplary method for generating power control look-up table at the device transmitting on the wireless link for optimizing TCP throughput via offline solution of dynamic programming based optimization for various channel models,

Fig. 16      shows an exemplary method for generating power control look-up table at the device transmitting on the wireless link for optimizing TCP throughput via solution of TCP dynamics aware heuristics,

Fig. 17      shows a wireless transmitter as depicted in Fig. 1,

Fig. 18.      shows an exemplary wireless transmitter as depicted in Fig. 1, and

Fig. 19      shows still a further exemplary wireless transmitter as depicted in Fig. 1

## Detailed Description of the Invention

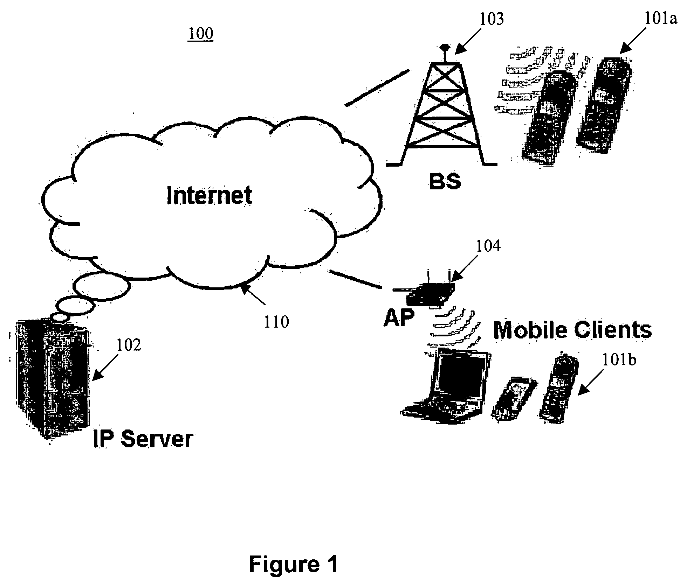

Fig. 1 shows only schematically an exemplary communication system 100 adapted to support a bulk transfer TCP traffic flow with an optimized end-to-end TCP throughput. The communication system 100 comprises a network 110 which supports communication based on TCP/IP. Examples of network 110 include the Internet or a local area network like Ethernet and at least one mobile network. The mobile network might be based on a cellular wireless technology compliant with the GSM, UMTS or EGPRS standard or on a WLAN technology compliant with the IEEE 802.11 standard. The illustrative communication system 100 as shown in Fig. 1 comprises both a public mobile network which is represented, for example, by a base station (BS) 103 and two exemplary mobile devices 101a and a WLAN represented by an access point (AP) 104 and three exemplary mobile devices 101b which may be a notebook, a PDA and/or a mobile telephone. The base station 103 and the access point 104 are arranged on the border of the Internet 110 and the mobile networks to allow mobile devices 101a and 101b, respectively, to access to services provided by an Internet host, for example an IP server 102, which is connected to the Internet 110. A bulk transfer TCP traffic flow can be originated by the IP server 102 and transmitted over a TCP connection to a mobile device 101a or a mobile device 101b. Furthermore, a bulk transfer TCP traffic flow can be originated by a mobile device 101a and/or a mobile device 101b and transmitted over a TCP connection to the IP server 102. In order to facilitate the illustration, it is assumed that a bulk transfer TCP traffic flow should be transmitted from the IP server 102 to a mobile device 101a or vice versa. Therefore, the TCP connection comprises a wired TCP link over the Internet 110 between the IP server 102 and the base station 103 and a wireless link between the base station 103 and the mobile device 101a. In order to achieve a high end-to-end TCP throughput, the TCP throughput is optimized by controlling the transmission power of the TCP wireless transmitter which can be the base station 103, a mobile device 101a, the access point 104 or a mobile device 101b. The transmission power is controlled or adapted by considering TCP's congestion control information as well as the channel condition of the wireless link of the TCP connection. TCP's congestion control information might be obtained from the TCP's congestion avoidance algorithms as employed by the TCP based transport layer of the TCP transmitter. In other words, an exemplary embodiment of the present invention considers the transmission dynamics of a bulk transfer of TCP flow and for that purpose models TCP's congestion avoidance behaviour in terms of rounds. TCP's congestion avoidance algorithm are explained in Paxson, et al., "TCP Congestion Control," IETF For Comments: 2581, April 1999.

The channel condition is defined, for example, by the channel gain factor which is denoted by g. It is related to the wireless channel signal-to-noise ratio (SNR) $\gamma$, as $\gamma = g\,\overline{P}/N$, where $\overline{P}$ is the average transmission power and N is the noise power.

In particular, the transmission power may be controlled on an uplink wireless channel by the mobile device 101a and/or 101b which constitute the TCP source of the TCP connection. The transmission power may be also controlled on a downlink wireless channel by the BS 103 and/or the AP 104 which function as a wireless transmitter, whereas the mobile device 101a and/or 101b are the TCP destinations.

It is from now on assumed that a TCP source, for example the IP server 102, has TCP segments to send. TCP segments are transmitted by the IP server 102 via the TCP as implemented at the transport layer of the IP server 102. Therefore, TCP congestion control algorithms are employed by the transport layer thereby resulting in a TCP congestion window size variation pattern.

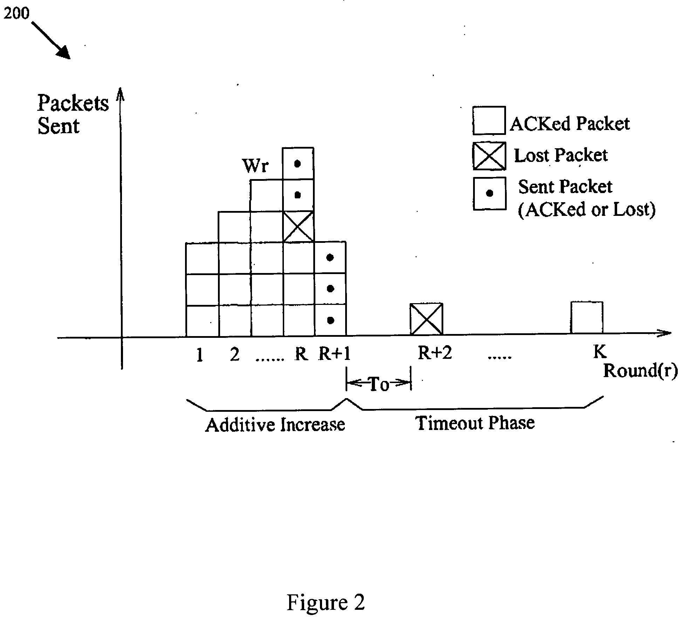

Fig. 2 shows a known exemplary evolution of such a TCP's congestion window size pattern. A TCP round begins with the back to back transmission a window of size W of TCP segments and ends on reception of an ACK for one of these TCP segments, where W is the size of a congestion window. Each ACK increases the window size by 1/W, so that the window size is W + 1 for the next round. It is assumed here that the number of TCP segments acknowledged by a received ACK is 1. The window size in round r is designated as $W_r$. Two phases are shown in the figure: the additive increase phase, and the timeout phase. The congestion window increases by 1 every round in the additive increase phase.

When a segment is lost in the current round, a timeout phase follows if amongst the following segments transmitted in the current round and the next, any less than three are successful. The TCP timeout value is denoted by To in Fig. 2 and the timeout duration doubles with every unsuccessful transmission attempt. For the ease of reference, the period between the beginnings of two successive additive increase phases is denoted by the term transmission cycle. In the event of a timeout loss indication, a cycle ends at round K as shown in Fig. 2 and the window size evolves from 1 for the next cycle. In the event that the loss in round R generates a TD (Triple Duplicate) indication, i. e. three segments following the lost segment are successful and generate duplicate ACKs, the cycle terminates at round R + 1. The window size is then reduced to half, and the additive increase for the next cycle follows.

It is an aspect to design a wireless transmitter as shown in Fig. 1, which captures the trade-off between TCP throughput and transmission power in a dynamic programming framework. The throughput optimization methodology in particular involves controlling the TCP segment success probabilities to minimize transmission power cost and to maximize the TCP throughput. The following embodiments delineate a method for TCP throughput optimization under slow and fast fading conditions of a wireless link, respectively. The TCP throughput optimization involves, for example, estimating the cost to be incurred from a round r to the end of a transmission cycle as shown in Fig. 2 and the minimization thereof. This cost depends on the transmission power incurred for the transmission of data link layer frames encapsulating the TCP segments and the throughput attained during the transmission cycle. The optimization approach for the discussed framework is motivated by Dynamic Programming principles as explained in Bertikas, "Dynamic Programming and Optimal Control," Athena Scientific, Belmont, MA, 2001.

**TCP Throughput Optimization Algorithm considering Slow Channel Variations**

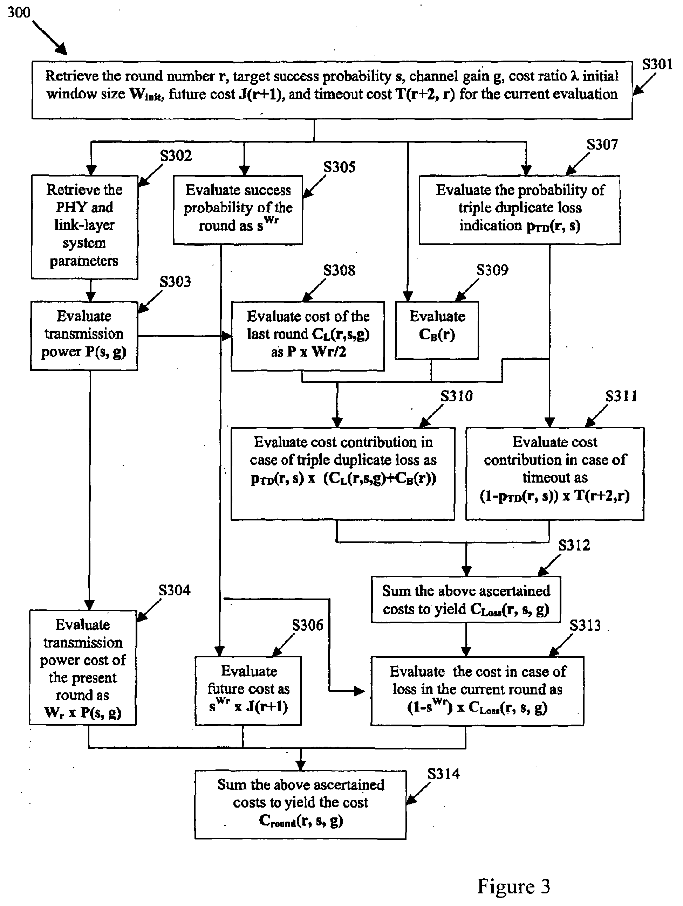

Figure 3 shows a method to evaluate the cost of a TCP cycle starting from round r when the wireless channel varies slowly, i. e. in the order of round trip time (RTT) of TCP. This cost $C_{round}$ is evaluated as a function of the channel gain g and target success probability s for the TCP segments in a round. As a consequence of the slow fading on the wireless channel, the channel gain remains constant during a round and hence a constant segment success probability is targeted. The parameters required for the evaluation are retrieved in Step S301. These include the round number r, the target segment success probability s during the round, the channel gain g, the initial window size $W_{init}$ with which the cycle began. The round number r and the initial window size $W_{init}$ are delivered from the transport layer of IP server 102 which functions as the TCP source, the channel gain is determined by the data link layer of the base station 103, which functions as the wireless transmitter, and the target segment success probability s is evaluated as described below. In addition, the cost ratio $\lambda$, the future cost J(r+1) and timeout cost T(r+2, r) are also retrieved. $\lambda$ represents the cost ratio between the transmission power and throughput. J(r+1) is the cost of the current cycle evaluated round r+1 onwards, averaged over channel gain distribution, and minimized over the target segment success probability values. T(r+2, r) represents the cost evaluated round r+2 onwards, averaged over the channel gain distribution and minimized over the target segment success probability, of the timeout phase of the cycle if a timeout occurs due segment loss in round r. As noted in Fig. 2, the timeout phase begins at round R+2, in the event of a timeout in round R. The significance of the parameters $\lambda$, J(r+1), and T(r+2, r) will be further elaborated in the ensuing methods. The physical and link-layer parameters, e.g. modulation and coding scheme, transmission power level, retransmission limit for the wireless link are retrieved in Step S302, which enable in Step S303 the determination of transmission power P(s, g) required for the transmission of a TCP segment to achieve a target success probability s under the prevailing channel gain g. The transmission power cost for the whole round is the determined in Step S304 as $W_r$ x P(s, g), where $W_r$ is the window size in round r and is easily determined via an additive increase in window size every round starting with a value of $W_{init}$ in round 1.

The probability that all the TCP segments in the current round are successfully transmitted is determined in Step S305 as $s^{W_r}$. The result when multiplied in Step S306 with J(r+1) yields the future cost component of $C_{round}$(r, s, g) . The probability $p_{TD}$ (r, s) that a triple duplicate loss indication occurs corresponding to TCP segment in round r is determined in Step S307. It is ascertained as the probability that three or more TCP segments in the window following the first lost segment in round r are successful, given that a segment loss occurred in round r. By selecting the target segment success probability for the round r+1 to be the same as round r, $p_{TD}$ (r, s) can be evaluated as

$$p_{TD}(r) = \sum_{i=3}^{W_r - 1} \binom{W_r - 1}{i} s^i (1 - s)^{W_r - 1 - i} \qquad (1)$$

In the event that $W_r$ is less than 3, $p_{TD}$(r,s) is 0 and the loss indication results in a timeout. As shown in Figure 2, a segment loss in round r results in termination of the additive increase phase in round r+1. The cost of round r+1 is evaluated in step S308 as P x Wr/2, approximating the number of segments in the round as Wr/2 and the transmission power (P) in the round to be the same as in round r.

For the TD loss indication case the throughput cost can be evaluated in Step S309 as

$$C_B(r) = \lambda \left( -\frac{\sum_{i=1}^{r} W_i + n_l}{(r + 1)RTT} - \rho(W_r) \right); \qquad (2)$$

where $n_1$ is the expected number of packets transmitted in the round following the one where the loss occurred. For evaluation, $n_1$ can be approximated as be $W_r/2$. $\lambda$ represents the cost ratio scaling factor between the power and throughput costs and RTT is the round trip time for the TCP connection. The first component in the expression for $C_B$(r) is the negative of throughput achieved when the current cycle terminates at round r+1. Thus, higher the throughput, greater the cost deduction from the cycle cost. The second component $-\rho(W_r)$ is introduced to the influence the evolution of the current cycle to favour high throughput in the following cycle. For a large $W_r$, the next cycle would have a large initial window size, and thus would yield more throughput. To favour that, cost for current cycle should have a higher cost deduction when the cycle terminates at a high $W_r$. Thus p(Wr) should be increasing in $W_r$. p(Wr) may be chosen for instance to be Wr/2.

Using the results from Steps S307, S308, and 3S09, the costs for the TD loss indication and TO loss indication cases are respectively evaluated in Steps S310 and S311. Step S310 is executed by summing the results from steps S308 and S309 and multiplying the sum with the result of Step S307. Step S311 is executed by subtracting the result of Step S307 from 1 and multiplying the resulting quantity with the T(r+2, r) from Step S301. The results of Steps S310 and S311 are summed in Step S312 to yield $C_{Loss}$(r, s, g) - the cost in the event of segment loss in round r. When multiplied with the probability of loss in a round as derived from Step S305, $C_{Loss}$(r, s,g) yields in Step S313, the cost contribution to $C_{round}$(r, s, g) in the event of loss in round r. Summing the results of Steps S304, S306, and S313, the cost $C_{round}$(r, s, g) is ascertained in Step S314.

The evaluation in method 300 can be summarized via the equation

$$C_{Loss}(r) = p_{TD}(r,s)\left(C_L(r,s,g) + C_B(r)\right) + \left(1 - p_{TD}(r,s)\right)T(r+2,r) \,, \tag{3}$$

and

$$C_{round}(r,s,g) = W_r P(s,g) + s^{Wr} J(r+1) + \left(1 - s^{Wr}\right)C_{Loss}(r) \,. \tag{4}$$

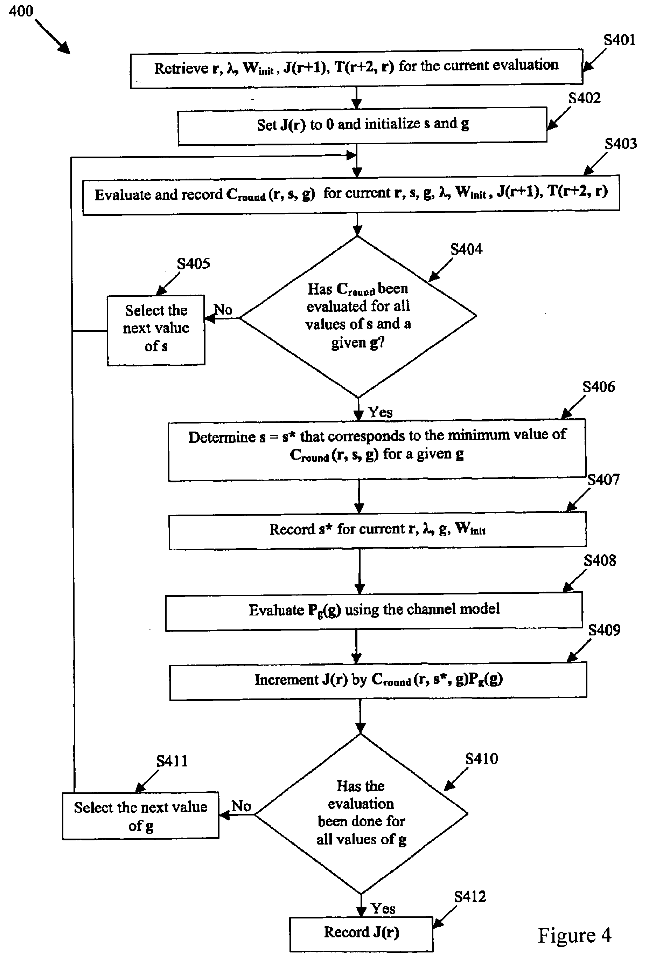

An exemplary method to evaluate the optimal cost of a cycle starting from round r is shown in Figure 4. This cost is termed as J(r) and is ascertained via minimization of the cost to be incurred from round r to the end of the cycle. In Step S401, the parameters r, $\lambda$, $W_{init}$, J(r+1), and T(r+2, r) required for the evaluation are retrieved. J(r) is initialized to 0 in step S402, and the initial values for s and g are selected from the set of the values that these can respectively assume. $C_{round}$(r, s, g) is then evaluated in Step S403 via method 300 and recorded. Step S403 is repeated until it is determined in Step S404 that the evaluation has been performed for all values of s, in which case the minimum value of $C_{round}$(r, s, g) is ascertained. The corresponding success probability for which the minimum value is achieved is recorded as s* in Step S407. The probability Pg(g) of channel gain g is evaluated in Step S408 by retrieving the prevailing channel model. For instance, an N-state Markovian model can be employed with each state representing the SNR of the channel. The inter-state transition probabilities of the model can be updated based on the observed channel conditions. Pg(g) can then be determined as the steady state probability of state $\gamma = g\,\overline{P}/N$. The cost $C_{round}$(r, s*, g) is weighed by the probability of channel gain, and the contribution is added in Step S409 to J(r). The evaluation process is repeated until it is determine in Step S410, that the evaluation has been performed for all values of g. The evaluated value of J(r) is recorded in Step S412.

The evaluation in method 400 can be summarized via the following equation:

$$J(r) = \sum_g \min_s \left(C_{round}(r,s,g) P_g(g)\right) \tag{5}$$

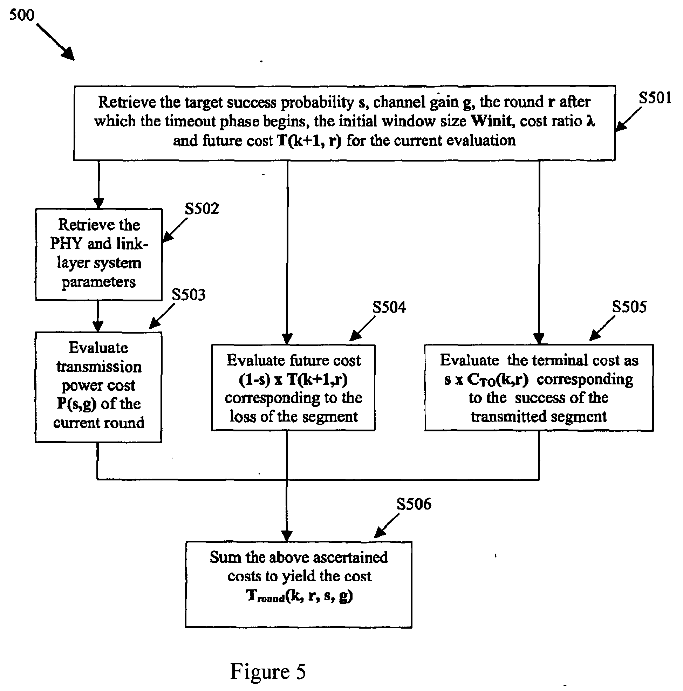

Figure 5 shows an exemplary method 500 to evaluate as a function of the target segment success probability s and the channel gain g, the cost of the timeout phase starting from round k, given that a segment loss in round r resulted in a timeout (Clearly, k>r). The parameters for the evaluation are retrieved in Step S501. These include the future cost T(k+1, r) which represents the cost evaluated round k+1 onwards, averaged over the channel gain distribution g and minimized over the success probability s. T(k+1, r) will be further elaborated in methods 600 and 700. The physical and link layer parameters of the wireless transmitter, for example the base station 102, are retrieved in Step S502 and the transmission power P(s, g) is then determined in Step S503. The future cost contribution is evaluated in Step S504 as T(k+1, r) multiplied with (1-s). (1-s) represents the probability that the segment transmitted in the current round is not successful and hence the timeout phase continues. In the event that the TCP segment transmitted in the current round k is successful, the cost contribution to $T_{round}$ is evaluated in Step S505 as the terminal cost $C_{TO}$(k,r) multiplied by the target segment success probability. The terminal cost $C_{TO}$(k, r) may be modelled as

$$C_{TO}(k, r) = \lambda\left(-\frac{\sum_{i=1}^{r} W_i + n_l + (k - (r + 1))}{\sum_{i=1}^{r+1} D_i + f(k - (r + 1)) T_0} - \rho(W_r)\right), \quad (6)$$

where f(k) denotes the timeout sequence given by

$$f(i) = \left\{ \begin{array}{ll} 2^i - 1, & i \leq 7 \\ 127 + 64(i - 7), & i \geq 8 \end{array} \right. \quad (7)$$

and the number of segments $n_1$ in the round r+1 can be approximated as Wr/2 and the duration of each round $D_i$ can be taken as RTT. To represents the timeout value. The cost components from Steps S503, S504, and S505 are summed to yield the cost $T_{round}$ (k,r,s,g) in Step S506.

The evaluation in method 500 can be summarized via the following equation:

$$T_{round}(k, r, s, g) = P(s, g) + (1 - s)T(k + 1, r) + s\,C_{TO}(k, r) \quad (8)$$

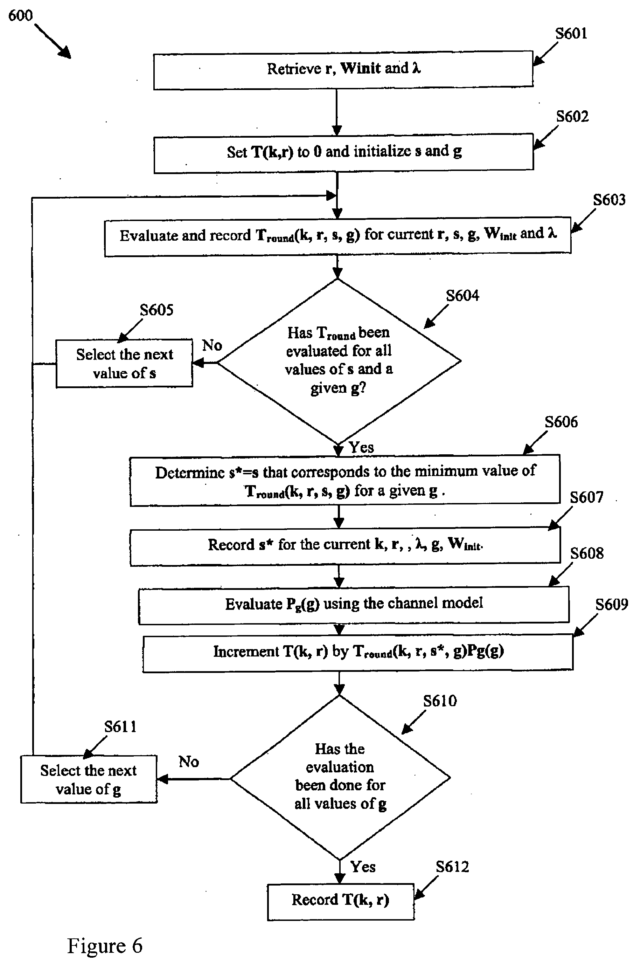

An exemplary method to evaluate the optimal cost T(k, r) of the timeout phase of a cycle starting from round k is shown in Figure 6. In Step S601, the parameters required for the evaluation are retrieved. T(k, r) is initialized to 0 in step S602, and the initial values for s and g are selected from the set of the values that these can respectively assume. $T_{round}$(k, r, s, g) is then evaluated in Step S603 via method 500 and recorded. Step S603 is repeated until it is determined in Step S604 that the evaluation has been performed for all values of s, in which case the minimum value of $T_{round}$(k, r, s, g) is ascertained in Step S606. The corresponding target segment success probability for which the minimum value is achieved is recorded as s* in Step S607. The probability Pg(g) of channel gain g is evaluated in Step S608 by retrieving the prevailing channel model. The cost $T_{round}$(k, r, s*, g) is weighed by Pg(g), and the contribution is added in Step 609 to J(r). The evaluation process is repeated until it is determine in Step S610, that the evaluation has been performed for all values of g. T(k,r) is recorded in Step S612.

The evaluation in method 600 can be summarized via the following equation:

$$T(k, r) = \sum_g \min_s \left(T_{round}(k, r, s, g) P_g(g)\right) \quad (9)$$

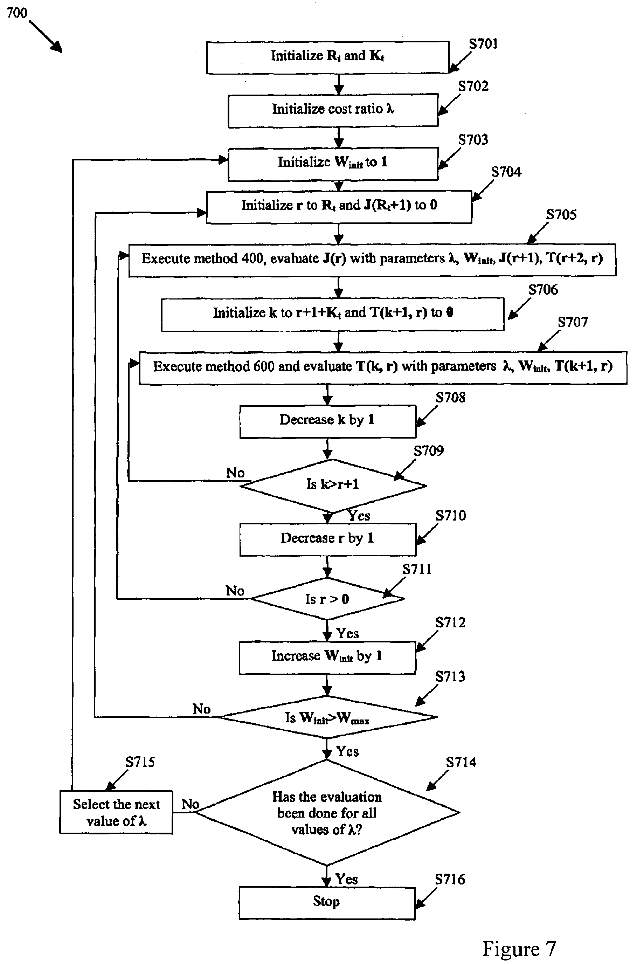

Figure 7 shows an exemplary method 700 to evaluate the target segment success probabilities for the rounds of the additive increase and timeout phases under different prevailing channel conditions. The terminal round numbers $R_t$ and $K_t$ in Step S701 denote the largest round numbers in the additive increase and timeout phases, for which the evaluation is performed. The cost ratio λ is initialized in Step S702 from the set of values it can take and $W_{init}$ is initialized to 1 in Step S703. The round number r is initialized to $R_t$ and the cost J($R_t$+1) to 0 in Step S704. J($R_t$+1) is initialized to 0 since $R_t$ is the terminal round number of the additive increase phase and hence, by definition, the cost to go from terminal round $R_t$ is 0. Method 400 is executed in Step S705 for the current values of the parameters. The target segment success probabilities for the different channel gain values are ascertained and recorded for the round r. Similarly, method 600 is executed in Step S707 for the timeout phase, after the initializations in Step S706 of round number k to r+1+$K_t$ and T(k+1, r) to 0 . Step S707 is repeated for all k values ranging from r+2 to r+1+$K_t$. Steps S705 to S710 are executed for the values of r ranging from 1 to $R_t$. The entire evaluation process is repeated for different values of $W_{init}$ and then for different values of cost ratio λ.

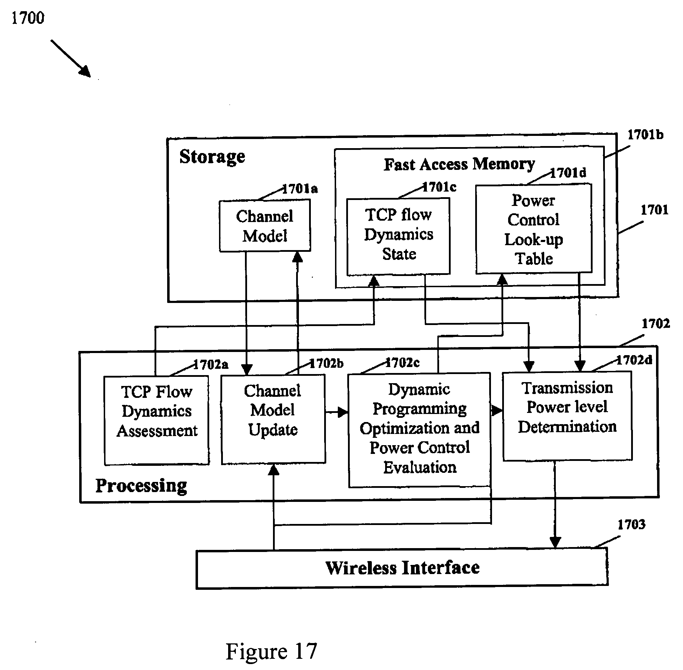

Method 700 for the slow channel variation case results in a look up table comprised of target segment success probabilities s* (ascertained while executing step S407 of method 400) for different r, λ, g, $W_{init}$ values for the additive increase phase. Similarly, a look up table comprised of s* for different k, r, λ, g, $W_{init}$ is obtained for the timeout phase while executing step S607 of method 600. These lookup tables can be consulted by a wireless transmitter, as will be described later in connection with Figs 17 to 19, to ascertain the target TCP segment success probability for different TCP phases (for example, additive increase or timeout), round number and channel gains. The parameter λ may be varied by the wireless transmitter depending on relative importance of power and TCP throughput costs. For instance a device low on battery power should have a low value of λ.

**Troughput Optimization Algorithm considering Fast Channel Variations**

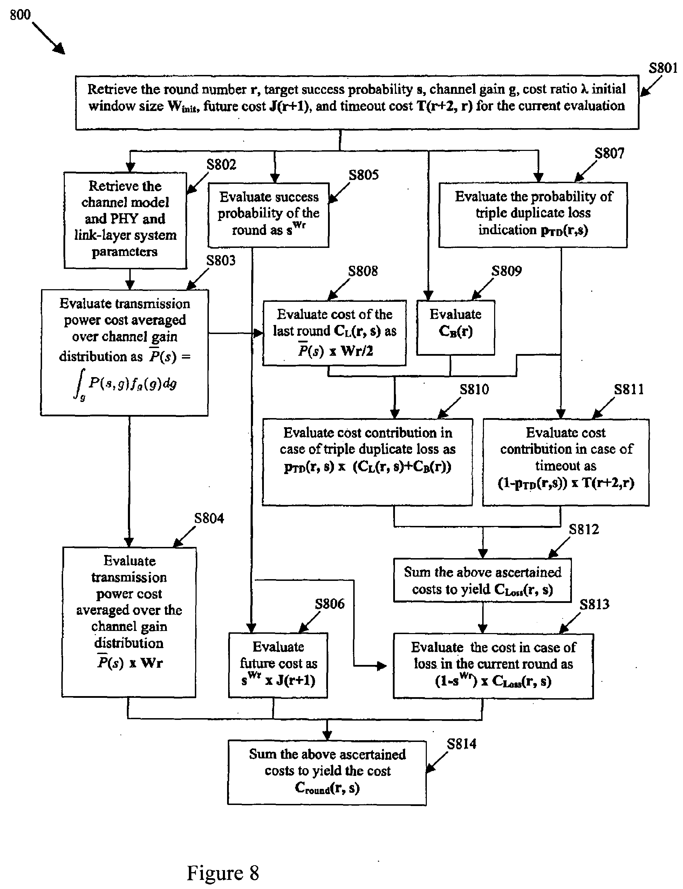

Figure 8 shows a method to evaluate the cost, starting from round r, of a TCP cycle when the channel varies fast (order of TCP segment transmission time). The cost $C_{round}$ is evaluated as a function of target success probability s for the TCP segments in a round. Unlike the method 300 for a slow varying channel, $C_{round}$ is not a function of channel gain. The parameters required for the evaluation are rerieved in Step S801. These include the round number r, the segment success probability s, the initial window size with which the cycle began $W_{init}$. In addition, the cost ratio λ, the future cost J(r+1) and timeout cost T(r+2, r) are also retrieved. The physical and link-layer parameters of the wireless transmitter are retrieved in Step S802, thus enabling the determination in Step S803 of the transmission power P(s,g) which is averaged over the channel gain distribution obtained from the channel model to yield $\overline{P}(s)$. The transmission power cost for the whole round is the determined in Step 804 as $W_r \times \overline{P}(s)$.

The probability that all the segments in the current round are successfully transmitted is determined as $s^{Wr}$ in Step S805. The result when multiplied with J(r+1) yields in Step S806 the future cost component of $C_{round}(r, s)$. The probability $p_{TD}(r, s)$ is determined in Step 807 using equation (1). The cost of round r+1, $C_L(r,s)$ is evaluated in step S808 by multiplying the result of Step S803 with Wr/2. In the evaluation of $C_L(r,s)$, the transmission power in the round r+1 is approximated to be the same (i.e. $\overline{P}(s)$) as in round r. For the TD loss indication case the throughput cost is evaluated in Step S809 using equation (2).

Using the results from Steps S807, S808, and S809, the costs for the triple duplicate loss indication and timeout case are respectively evaluated in Steps S810 and S811. Step S810 is executed by summing the results from steps S808 and S809 and multiplying the sum with the result of Step S807. Step S811 is executed by subtracting the result of Step S807 from 1 and multiplying the resulting quantity with the T(r+2, r) from Step S801. The results of Steps S810 and S811 are summed in Step S812 to yield $C_{Loss}(r, s)$ - the cost in the event of segment loss in round r. When multiplied with the probability of loss in a round as derived from Step S805, $C_{Loss}(r, s)$ yields in Step S813, the cost contribution to $C_{round}(r, s)$ in the event of loss in round r. Summing the results of Steps S804, S806, and S813, the cost $C_{round}(r, s)$ is ascertained in Step S814.

The evaluation in method 800 can be summarized via the equation

$$C_{Loss}(r) = p_{TD}(r,s)\big(C_L(r,s) + C_B(r)\big) + \big(1 - p_{TD}(r,s)\big)T(r+2,r) \text{ ,}$$

and

$$C_{round}(r,s) = W_r \overline{P}(s) + s^{Wr} J(r+1) + \big(1 - s^{Wr}\big) C_{Loss}(r) \text{ .} \qquad (11)$$

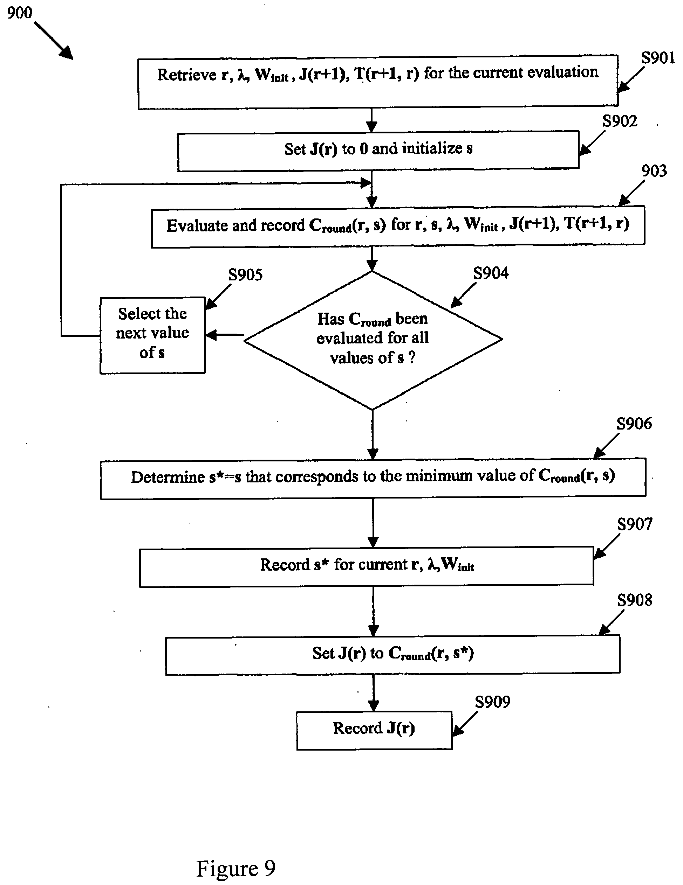

An exemplary method 900 to evaluate optimal cost J(r) of a cycle starting from round r for a fast varying channel is shown in Figure 9. In Step S901, the parameters r, λ, $W_{init}$, J(r+1), and T(r+2, r), required for the evaluation are retrieved. J(r) is initialized to 0 in step S902, and the initial value for s is selected from the set of the values that the parameter s can assume. $C_{round}(r, s)$ is then evaluated in Step S903 via method 800 and recorded. Step S903 is repeated until it is determined in Step S904 that the evaluation has been performed for all values of s, in which case the minimum value of $C_{round}(r, s)$ is ascertained in Step S906. The corresponding success probability for which the minimum value is achieved is recorded as s* in Step S907. J(r) is set to $C_{round}(r,s*)$ in Step S908 and recorded in Step S909.

The evaluation in method 900 can be summarized via the following equation:

$$J(r) = \min_s \big(C_{round}(r,s)\big) \qquad (12)$$

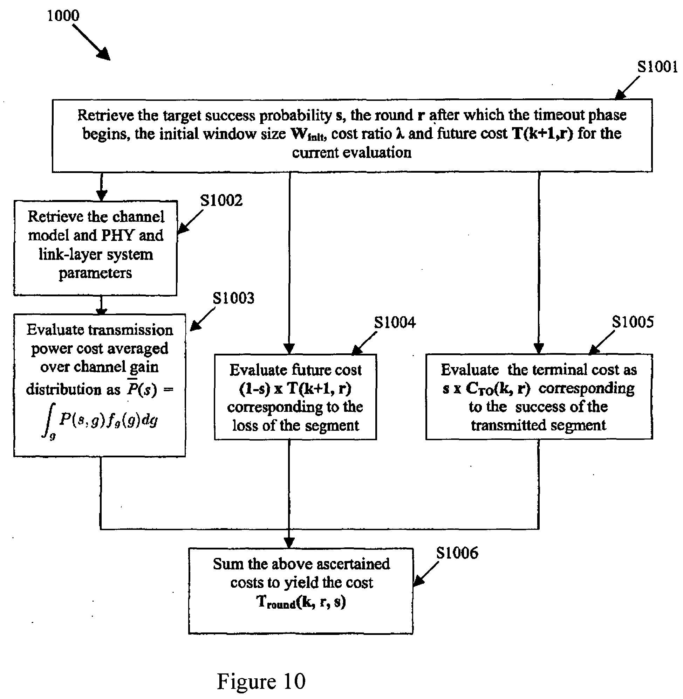

Figure 10 shows an exemplary method 1000 to evaluate as a function of target segment success probability s, the cost of the timeout phase for the fast channel variation case, starting from round k, given that a segment loss in round r resulted in a timeout (Clearly, k>r). The parameters for the evaluation are retrieved in Step S1001. The physical and link-layer parameters of the wireless transmitter are retrieved in Step S1002, thus enabling the determination of the transmission power P(s,g) for all values of channel gain g. In Step S1003, P(s,g) is averaged over the channel gain distribution fg(g) obtained from the channel model to yield $\overline{P}(s)$. The future cost contribution is evaluated in Step S1004 as T(k+1,r) multiplied with (1-s) which represents the probability that the segment transmitted in the current round is not successful and hence the timeout phase continues. In the event that the segment transmitted in the current round k is successful, the cost contribution to $T_{round}$ is evaluated in Step S1005 as the terminal cost $C_{TO}$(k, r) multiplied by the segment success probability. The cost components from Steps S1003, S1004, and S1005 are summed to yield the cost $T_{round}$ (k, r, s) in Step S1006.

The evaluation in method 1000 can be summarized via the following equation:

$$T_{round}(k,r,s) = \overline{P}(s) + (1-s)T(k+1,r) + s\,C_{TO}(k,r) \qquad (13)$$

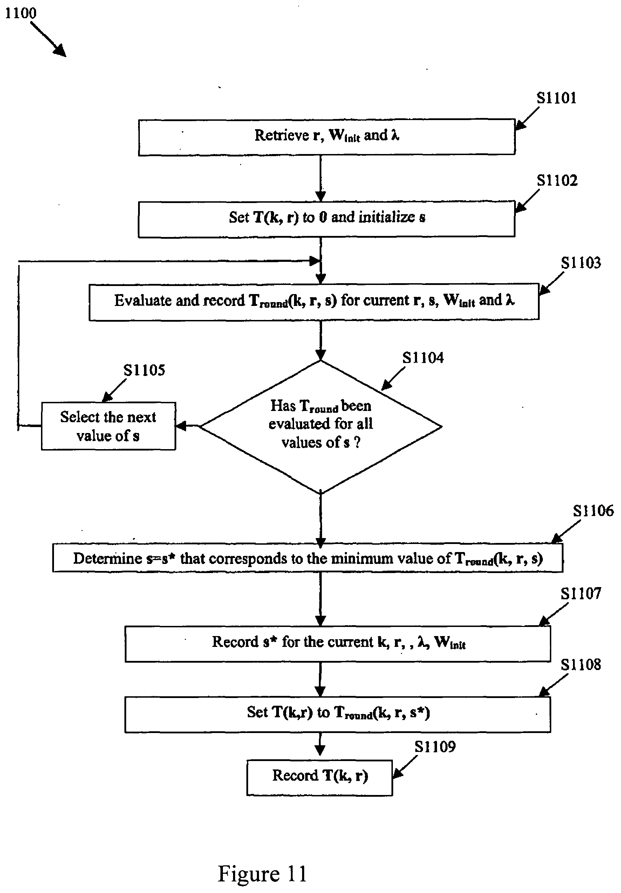

An exemplary method to evaluate for the fast channel variation case the optimal cost T(k, r) starting from round k of the timeout phase of a cycle (given that a segment loss in round r resulted in a timeout) is shown in Figure 11. In Step S1101, the parameters required for the evaluation are retrieved. T(k ,r) is initialized to 0 in Step S1102, and the initial value for s is selected from the set of the values it can assume. $T_{round}$(r, s) is then evaluated in Step S1103 via method 1000 and recorded. Step S1103 is repeated until it is determined in Step S1104 that the evaluation has been performed for all values of s, in which case the minimum value of $T_{round}$(r, s) is ascertained in Step S1106. The corresponding success probability for which the minimum value is achieved is recorded as s* in Step S1107. The cost T(k, r) is set to $T_{round}$(k, r, s* ) in Step S1108 and recorded in Step S1109.

The evaluation in method 1100 can be summarized via the following equation:

$$T(k,r) = \min_s \left( T_{round}(k,r,s) \right) \qquad (14)$$

The target segment success probabilities for the rounds of the additive increase and timeout phases under different prevailing channel conditions for the fast channel variation case is evaluated via method 700 shown in Figure 7. Method 700 when executed for this case results in a look up table comprised of target segment success probabilities s* (ascertained while executing step S907 of method 900) for different r, $\lambda$, $W_{init}$ values for the additive increase phase. Similarly, a look up table comprised of s* for different k, r, $\lambda$, $W_{init}$ is obtained for the timeout phase while executing step S1107 of method 1100. These lookup tables can be consulted by a wireless transmitter, as will be described next in connection with Figs. 17 to 19, to ascertain the target TCP segment success probability for different TCP phases (for example, additive increase or timeout) and round numbers. The parameter $\lambda$ may be varied by a system depending on relative importance of power and TCP throughput costs. For instance a device low on battery power should have a low value of $\lambda$.

**System Design and Methods Supporting TCP Throughput Optimization**

The following description delineates the methodology and system design for implementing in a wireless network the optimization method and framework highlighted in Figures 3, 4, 5, 6, and 7 for slow channel variations and Figures 8, 9, 10, 11 and 7 for fast channel variations.

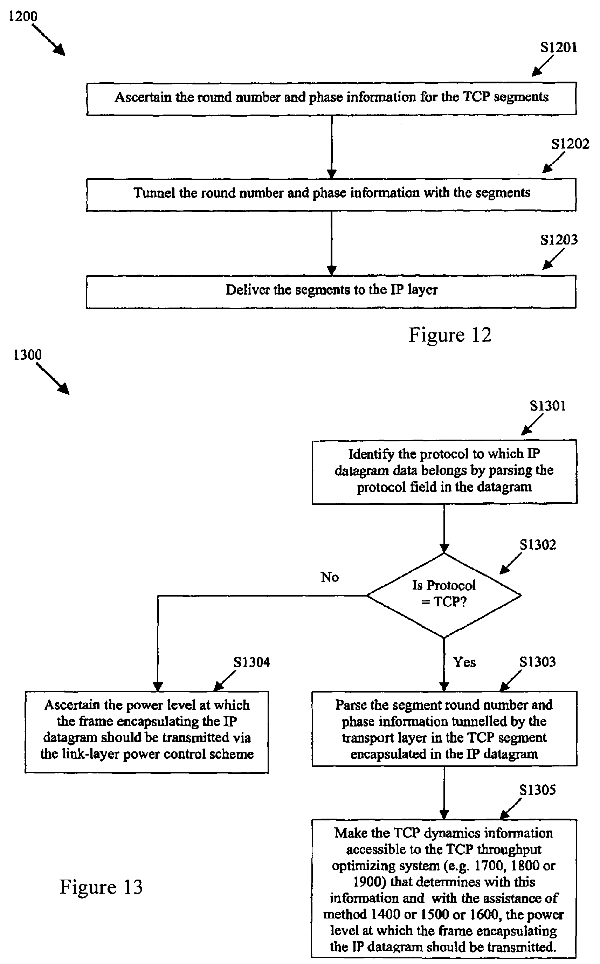

Figure 12 shows an exemplary method 1200 for tunnelling the TCP dynamics information at the transport layer of the TCP source, for example the IP server 104, for executing throughput optimization methods. In Step S1201, the round numbers of the TCP segments to be transmitted is determined by TCP at the transport layer of the IP server 104. In addition, the phase, for example, the additive increase, or timeout phase, during a TCP transmission cycle is also determined for the TCP segments to be transmitted. The round number and phase information is then included with the TCP segments in Step S1202 and the TCP segments are then delivered to the IP layer in Step S1203.

Figure 13 shows a method 1300 for the data link-layer of the base station 102 transmitting on the wireless link to ascertain for a TCP flow, the TCP segment dynamics information, i. e. the round number and phase information. The phase information pertains to, for example, the information that the phase is additive increase or timeout in the current cycle. In step S1301, the protocol to which the data in the datagram conveyed down by the IP layer belongs, is determined. This can be done, for instance by parsing the protocol field in the IPv4/IPv6 header at the IP layer. In Step S1302, if it is determined that the protocol is TCP then the round number and phase information of the TCP segment encapsulated in the datagram is parsed, and the TCP dynamics information is made available in Step S1305 to, for example, the data link layer of the wireless transmitter as shown in Figs. 17 to 19. for exercising TCP dynamics aware power control adaptation. If it is determined in Step S1303 that the protocol to which the IP datagram data belongs is not TCP, then any state of the art link-layer power control algorithm can be employed by the wireless transmitter to determine the power at which the link-layer frame should be transmitted.

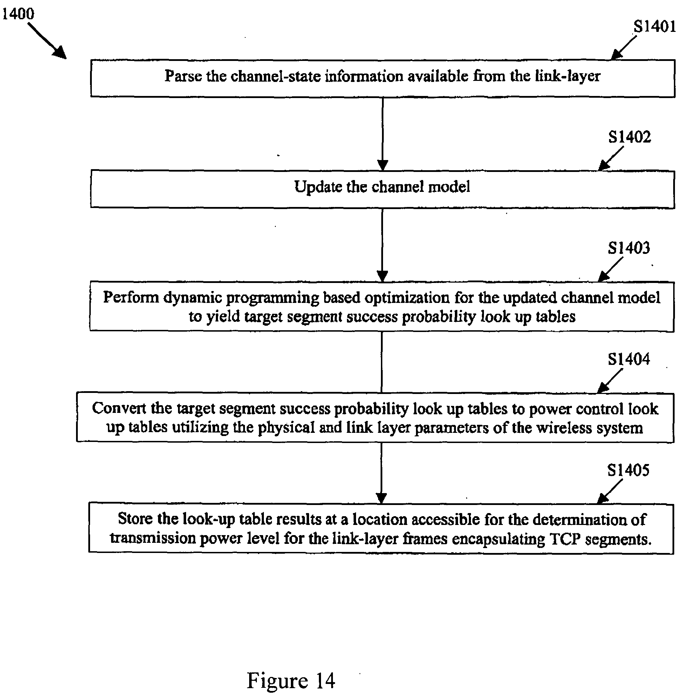

Figure 14 shows a method to obtain the power control look-up table via runtime evaluation of dynamic programming based optimization. The power control look-up table stores the transmission power levels at which link-layers frames should be transmitted as a function of TCP round number and phase by the base station 102 to a mobile device 101a. In Step S1401, the channel-state information as available to the data link-layer of the wireless transmitter, for example the base station 102, is determined. This information may include, for example, the SNR and bit error rate (BER) of the wireless channel. Based on the channel state information, the employed channel model is updated in Step S1402. For instance, an N-state Markovian model can be employed with each state representing the SNR of the channel, and the inter-state transition probabilities of the model can be updated based on the observed channel conditions. Dynamic programming based optimization for the updated channel model is performed in Step S1403 to yield target segment success probability look up tables. In Step S1404, the target segment success probability look up tables are converted to power control look up tables utilizing the physical and link layer parameters of the wireless system. In Step S1405, the power control look-up table results are made accessible to, for example, the wireless transmitter as shown in Fig, 17, for the determination of power levels for TCP segments.

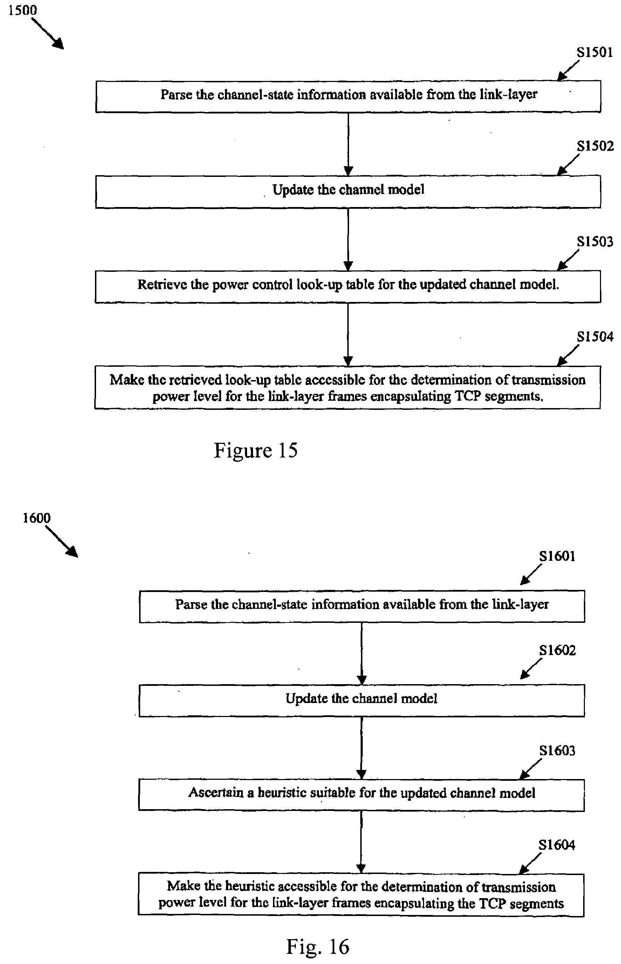

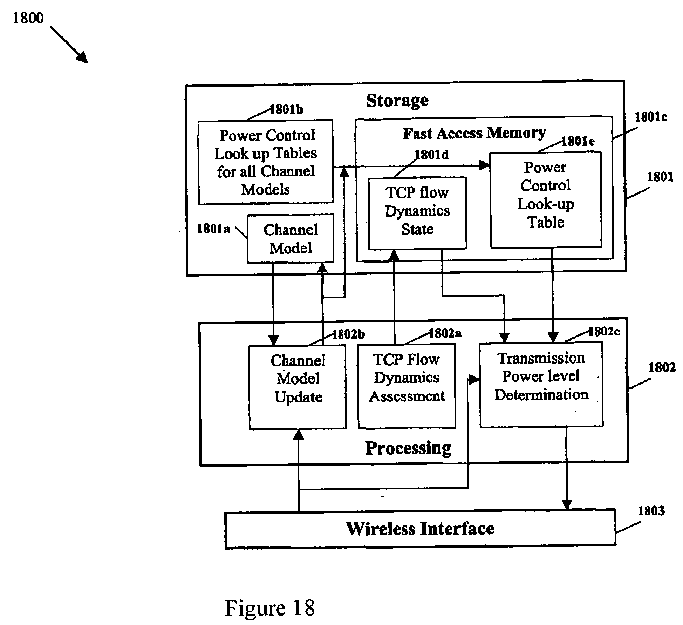

A method to obtain the power control look up table when the solution to the TCP dynamics aware optimization are performed offline and stored for different channel models, is shown is Figure 15. In Step S1501 the channel state information from the data link-layer is obtained, and in Step S1502 is used to update the employed channel model. In Step S1503, the power control look-up table for the updated channel model is then retrieved from the storage space containing an exhaustive list of tables. The retrieved look-up table is then made available in Step S1504, to, for example, the wireless transmitter as shown in Fig.18, for exercising TCP dynamics aware power control.

Figure 16 shows a method to perform TCP dynamics aware power adaptation when the heuristics are employed for determining the power levels for transmission of link-layer frames encapsulating the TCP segments. Such heuristics allow the determination of target segment success probability for slow and fast varying channels without having to solve dynamic programming based optimization. In Step S1601, the channel-state information from the link-layer is obtained and the channel model is updated in Step S1602. A heuristic suitable for the updated channel model is then retrieved in Step S1603, and is made available in Step S1604, to, for example, systems 1900 (to be described next), for exercising TCP dynamics aware power adaptation.

Dynamic programming (DP) based power adaptation can bring about substantial TCP throughput benefits for wireless channel. However, the computation of DP solutions in a real scenario may be beset with processing power limitations. We provide some information on evaluation of heuristics that obviate the necessity for computation of DP solutions. The approach involves an analytical function design to approximate the optimal packet success probability generated via DP solutions. The required transmission power for a given channel gain and TCP round can then be ascertained by the wireless transmitter without the need for DP computation.

We first consider the slow fading case. When considering the packet success probability s for different channel gains and for a fixed cost ratio, we observed several traits useful for heuristic design: a) s is decreasing with TCP round number r for a given channel gain value. This is because the early rounds are more important for the overall system throughput and need to be protected against packet loss via high power and thus high packet success probability b) s is increasing with channel g for a given round r. This is intuitive as well: as the channel conditions improve, high packet success probability can be maintained. In addition to the above, we have observed the following information from dynamic programming results: c) for a given channel gain g and r, s increases with the cost ratio $\lambda$ d) For channel gain below a threshold $g_{th}$, the packet success probability is close to zero, and e) for fixed g and r, the threshold $g_{th}$ decreases with $\lambda$.

With these observations, heuristics can be designed as follows. The truncation threshold $g_{th}$ is approximated by $g_0 f(\lambda)$, where $f(\lambda)$ is a decreasing function, and converges to 1 as $\lambda \, \dot{\iota} u \, \dot{\iota} b$. Hence for values of channel gain lower than the threshold, the success probability is taken to be 0. For $g \, \dot{\iota} \acute{Y} \, g_{th}$, the target success probability s for round number r and channel gain $g$ is modeled as,

$$s(r, g) = \min\{s_{max}, \beta \exp((R_t + 1 - r)^{1/\lambda} - R_t^{1/\lambda})(1 - Q(\sqrt{g}))\}$$

where $s_{max}$ is the maximum value of $s$ and $\beta$ is $1.5s_{max}$. $Q$ is the Q-function (Marcum Q-function) and is used here to capture the effect of channel gains on packet success probability. $R_t$ is the terminal round number.

We next consider the fast fading case. In this case the target segment success probability is not a function of channel gain. Therefore, the success probability is modeled as,

$$s(r) = \min\{s_{max}, \beta \exp((R_t + 1 - r)^{1/\lambda} - R_t^{1/\lambda})\};$$

where threshold $g_{th}$ is given as before and $s(r)$ is 0 for $g < g_{th}$.

Figure 17 shows an exemplary wireless transmitter 1700 adapted to be used in the communication system 100 of Fig. 1. The wireless transmitter 1700 is designed to perform the exemplary method 1400 shown in Figure 14. The wireless transmitter 1700 comprises a storage arrangement 1701 and a processing unit 1702 which are implemented its data link layer. Furthermore, the wireless transmitter 1700 includes a wireless interface 1703 which is part of the physical layer. The storage arrangement 1701 stores instructions for the processing unit 1702 to evaluate TCP dynamics aware transmission power levels. In addition, it has a storage 1701a that stores the current channel model. Furthermore, it has a fast access memory module 1701d. The fast access memory module has two storages 1701c and 1701d for storage of TCP dynamics flow parameters and a power control look-up table, respectively. The power control look-up table stores transmission power levels evaluated by the processing unit 1702 as explained below, channel gain factors, the initial window size, the round number and the phase information of a modelled TCP congestion window size variation pattern.

The processing unit 1702 comprises computation means 1702a for TCP flow dynamics assessment, a module 1702b for updating the channel model stored in storage 1701a, a module 1702c for executing dynamic programming based optimization and power control evaluation. The results of module 1702c are stored in the storage 1701d. The processing unit 1702 further comprises a module 1702d for transmission power level determination.

The wireless interface 1703 is adapted to receive information about the channel conditions of the wireless link and also to dictate the transmission power level at which data link frames embedding TCP data are to be transmitted on the wireless link. Furthermore, the wireless interface 1703 delivers the information about the state of the wireless channel to the module for updating the wireless channel model 1702b. Based on the current channel state information and the existing channel model available from the channel model storage 1701a, the channel model update is performed by module 1702b and the updated channel model is stored in the storage 1701a.

Dynamic programming optimization as described in connection with Fig. 3 to 11 is performed by module 1702c using the updated channel model of module 1702b, the resulting power control lookup table stored in storage 1701d of the fast access memory 1701b.

The TCP flow dynamics assessment module 1702a obtains the round number and phase information of the TCP flow by executing, for example, the method 1300 shown in Figure 13 and stores the respective parameters in the TCP flow dynamics state storage 1701c. Using the power control lookup table from storage 1701d, the information from storage 1701c and the information of the current channel condition received by the wireless interface 1703, the transmission power level for a link-layer frame encapsulating a TCP segment is ascertained through computations performed in module 1702d and is made available to the wireless interface 1703 which adjusts the transmission power of the wireless transmitter 1700 respectively. Since the lookup table from TCP flow dynamics state storage 1701c and power control lookup table stored in storage 1701d are performed every time a frame is to be transmitted over the wireless link, these storages need to reside in the fast access memory unit 1701b. On the other hand the channel model stored in storage 1701a is updated only when there is an update in the channel model evaluated in module 1702b.

In case the wireless transmitter 1700 is, for example, embodied by the mobile device 101a which then operates as the TCP source, the TCP flow dynamics assessment may be done by employing the method 1300 at the mobile device 101a. The transport layer of the mobile device 101a may use method 1200 shown in Figure 12 to tunnel TCP dynamics to the data link layer of the mobile device 101a.

On the other hand, if the wireless transmitter 1700 is embodied by the base station 102 or access point 103 delivering TCP data to the mobile devices 101a and 101b, respectively, the TCP flow dynamics assessment performed in module 1702a may be performed by employing method 1300 on the data received by the base station 102 or access point 103. The data containing the TCP congestion control parameters are sent by the IP server 104, which employs method 1200 to tunnel TCP dynamics information generated at its transport layer to the data link layer of the base station 102 or the access point 103.

Figure 18 shows an exemplary wireless transmitter 1800 to perform, for example, the exemplary method 1500 shown in Figure 15. The wireless transmitter 1800 comprises a storage arrangement 1801 and a processing unit 1802 which are implemented in the data link layer. The wireless transmitter 1800 further includes a wireless interface 1803 as part of the physical layer. The storage arrangement 1801 stores instructions employed by the processing unit 1802 for evaluation of TCP dynamics aware power control measures.

In addition, it comprises a storage 1801a that stores the current channel model. It also has a storage 1801b which stores the power control lookup tables for different channel models. Furthermore, it has a fast access memory module 1801c. The fast access memory comprises storages 1801d and 1801e for storage of TCP dynamics flow state and a power control look-up table, respectively.

The processing unit 1802 comprises a module for TCP flow dynamics assessment 1802a, a module for updating the channel model 1802b, and a module for transmission power level determination 1802c.

The wireless interface 1803 receives information about the channel conditions of the wireless link and also dictates the transmission power level at which data link layer frames containing TCP data are to be transmitted on the wireless link.

The wireless interface 1803 provides information about the state of the wireless channel to the channel model update module 1802b. Based on the current channel state information and the existing channel model available from the channel model storage 1801a, the channel model update is performed by module 1802b and the updated channel model is stored in storage 1801a. The power control look up table for the updated channel model is retrieved from storage 1801b and stored in storage 1801e of the fast access memory 1801c. The TCP flow dynamics assessment module 1802a obtains the round number and phase information of the TCP flow from the transport layer of the TCP source via the method 1300 shown in Figure 13 and stores it in the TCP flow dynamics state storage 1801c. It is to be noted, that the TCP source may be the wireless transmitter itself or the IP server 104 of Fig. 1.

Using the power control lookup table from storage 1801e, the information from storage 1801d and the information of the current channel condition from the wireless interface 1803, the transmission power level for the link-layer frame is ascertained via computations performed in module 1802c and is made available to the wireless interface 1803 to adjust the transmission power, respectively.

In case the wireless transmitter 1800 is embodied by a mobile device 101a or 101b which operates as the TCP source, the TCP flow dynamics assessment module 1802a may be controlled by employing the method 1300 at the mobile device which may use method 1200 shown in Figure 12 to tunnel TCP dynamics form the transport layer to the data link layer of the mobile device. On the other hand, if the wireless transmitter 1800 is embodied by the base station 103 or the access point 102 delivering TCP data to the mobile devices 101a and 101b, respectively, the TCP flow dynamics assessment module 1802a may be performed by employing method 1300 on the data received by the base station 103 or access point 102 and sent by the IP server 104 which operates as the TCP sender. The IP server 104 may employ method 1200 to tunnel TCP dynamics information from the transport layer to the data link layer of the base station 103 or access point 102 via the wireless interface 1803.

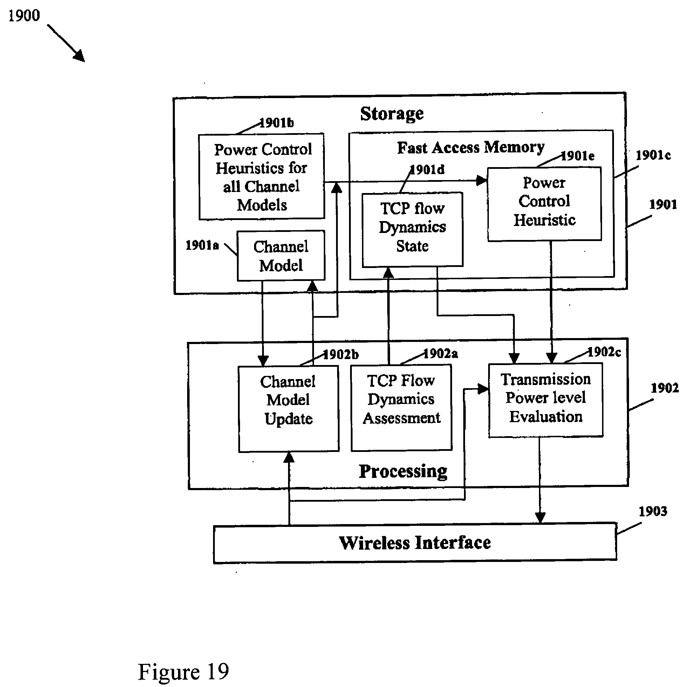

Figure 19 shows a further exemplary wireless transmitter 1900 to perform the exemplary method 1600 shown in Figure 16. The description of the components and functionality of the wireless transmitter 1900 is similar to that of the wireless transmitter 1800 except that storage 1901b stores the power control heuristics for different channel models and not the power control look up tables as stored by storage 1801b. In particular, the wireless transmitter 1900 comprises a storage arrangement 1901 and a processing unit 1902 which are implemented in the data link layer. Furthermore, a wireless interface is part of the physical layer of the wireless transmitter.

Also, every time a channel update occurs, the power control heuristic for the updated channel are transferred to a power control heuristic storage 1901e. Finally, the wireless transmitter 1900 differs from the wireless transmitter 1800 in that the transmission power for a link-layer frame is ascertained by module 1902c by evaluating the power control heuristic from storage 1901e for the current channel state information available from the wireless interface 1903 and the current TCP dynamics flow state available from storage 1901d.

## Claims

1. A method for optimizing the throughput of a flow of TCP segments being transferred from a TCP source to a TCP destination over a transmission path which comprises a wireless link between a wireless transmitter (1700, 1800, 1900) and a wireless receiver (103, 102; 101a, 101b), said method comprising the steps of:

   a) determining, at the transport layer of the TCP source, at least one current TCP congestion control parameter of a TCP congestion control algorithm used by the TCP source to transmit at least one TCP segment;
   b) determining, at the data link layer of the wireless transmitter (1700, 1800, 1900), the current channel condition of the wireless link for at least one TCP segment to be transmitted by the wireless transmitter (1700, 1800, 1900);
   c) transferring the at least one current TCP congestion control parameter from the transport layer of the TCP source to the data link layer of the wireless transmitter (1700, 1800, 1900);
   d) updating a predetermined wireless channel model in response to the current wireless channel condition determined in step b), wherein the predetermined wireless channel model is an N-state Markovian model, each of the N states representing a channel gain factor of the wireless channel model, and in response to the at least one TCP congestion control parameter and the current channel condition of the wireless link, and based on the current wireless channel model, determining, at the data link layer of the wireless transmitter (1700, 1800, 1900), the transmission power level, at which at least one data link layer frame containing at least a portion of a TCP segment is to be transmitted over the wireless link to the wireless receiver (103, 102; 101a, 101b).

2. The method according to claim 1, wherein
   a variation of the TCP congestion window size during a TCP transmission cycle is controlled by a congestion control algorithm of TCP, each TCP transmission cycle being defined by a number of rounds and an initial window size, wherein the TCP congestion control parameter includes the current round number and information on the current phase of the cycle, and wherein step d) comprises the steps of:

> d1) Evaluating a set of transmission power levels as a function of the round number, the initial window size and the phase of a TCP transmission cycle by executing a TCP throughput optimization algorithm on the basis of the updated wireless channel model,
> d2) Storing the evaluated set of transmission power levels, the round numbers, the initial window size, the phase and the wireless channel condition, and
> d3) Selecting from the stored set the transmission power level in response to the current TCP congestion control parameters and the current channel condition.

3. The method of claim 2, wherein the TCP congestion control algorithm is the TCP congestion avoidance algorithm and the TCP transmission cycle comprises an additive increase and a timeout phase.

4. The method according to claim 2 or 3, wherein
the TCP throughput optimization algorithm is solved via a finite-period dynamic programming procedure and wherein step d1) comprises the following steps:

> - determining for each round of a TCP transmission cycle the target success probability for TCP segments to be transmitted during the respective round by minimizing a predetermined cost-to-go function for each round of a TCP transmission cycle, wherein by said cost-to-go function the cost to be incurred from the respective round to the end of a transmission cycle is estimated, and
> - converting each target success probability to the corresponding transmission power level, and wherein said method further comprises the following step:
> - transmitting the data link layer frame containing at least a portion of a TCP segment over the wireless link to the wireless receiver, thereby optimizing the TCP throughput.

5. The method according to claim 4, wherein each target success probability is converted to the corresponding transmission power level by utilising physical layer and data link layer parameters of the wireless transmitter (1700, 1800, 1900).

6. The method according to any one of the claims 1 to 5,
wherein
the channel condition of the wireless link is represented by a channel gain factor of the wireless link.

7. The method according to any one of the claims 1 to 6, wherein a channel gain factor used in the wireless channel model is set to the same value during each round of a TCP cycle.

8. The method according to any one of the claims 1 to 7, wherein a transmission power cost averaged over a channel gain distribution is evaluated and used in the wireless channel model.

9. The method according to any one of the claims 1 to 5, wherein steps a) to d) are performed every time a data link layer frame containing at least a portion of a TCP segment is to be transmitted.

10. The method according to claim 1, wherein a plurality of different wireless channel models and TCP transmission cycles are provided for, wherein for each wireless channel model and for each TCP transmission cycle a set of transmission power levels for data link layer frames containing at least a portion of a TCP segment are evaluated by executing a TCP throughput optimization algorithm and then stored, wherein
step d) comprises the following steps:

> - selecting in response to the updated wireless channel model a set of transmission power levels, and
> - selecting, in response to the current TCP congestion control parameters and the current channel condition of the wireless link, from the set of transmission power levels the transmission power level at which the data link-layer frame containing at least a portion of a TCP segment is to be transmitted over the wireless link to the wireless receiver (103, 102; 101a, 101b).

11. The method according to claim 1, wherein a plurality of different wireless channel models are provided for, wherein for each wireless channel model a power control heuristics is predetermined and stored, wherein step d) comprises the following steps:

- selecting in response to the updated wireless channel model the corresponding heuristic, and
- evaluating in response to the current TCP congestion control parameters and the current channel condition of the wireless link the selected heuristic to obtain the transmission power level at which the data link-layer frame containing at least a portion of a TCP segment is to be transmitted over the wireless link to the wireless receiver (103, 102; 101a, 101b).

12. The method according to any one of the claims 1 to 11, wherein the transmission path comprises a wired path.

13. The method according to claim 12, wherein
the TCP source is the wireless transmitter, the wireless receiver is a base station (103) or an access point (102) and the TCP destination terminates the wired path.

14. The method according to claim 12, wherein
the TCP source terminates the wired path, the wireless receiver is a mobile device (101a, 101b) and the wireless transmitter is a base station (103) or an access point (102), wherein the current TCP congestion control parameters determined by the TCP source in step a) are transmitted to the data link layer of the wireless transmitter.

15. The method according to any one of the claims 12 to 14, wherein the wired path belongs to the Internet or a local area network and wherein the wireless link is part of a mobile network or a wireless local area network.

16. A communication system (100) for optimizing the throughput of a flow of TCP segments being transferred from a TCP source (104; 101a, 101b) to a TCP destination (104; 101a, 101b) over a transmission path which comprises a wireless link between a wireless transmitter (1700, 1800, 1900) and a wireless receiver (103, 102; 101a, 101b), the communication system comprising a wireless transmitter, said wireless transmitter comprising:

a physical layer (1703, 1803, 1903) adapted to receive over said wireless link information of the current channel condition of the wireless link ,
first storage means (1701a, 1801a, 1901a) storing a predefined wireless channel model, wherein the predefined wireless channel model is an N-state Markovian model, each of the N states representing a channel gain factor of the wireless channel model,
second storage means (1701d, 1801d, 1901d) storing at least one current TCP congestion control parameter of a TCP congestion control algorithm used by the TCP source to transmit at least one TCP segment,
updating means (1702b, 1802b, 1902b) adapted to update the wireless channel model in response to the information of the current channel condition of the wireless link and
determination means (1702d, 1802c, 1902c) adapted to determine in response to the at least one TCP congestion control parameter and the current channel condition of the wireless link, and based on the current wireless channel model, the transmission power level, at which at least one data link layer frame containing at least a portion of a TCP segment is to be transmitted over the wireless link to the wireless receiver.

17. The communication system according to claim 16, further comprising a transmission path, a TCP source and a wireless receiver, wherein the transmission path comprises a wired path, said TCP source (104) being connected to the wired path, the wireless receiver being a mobile device (101a, 101b) and the wireless transmitter being a base station (103) or an access point (102), said TCP source (104) being adapted to transmit the at least one current TCP congestion control parameter embedded in a predetermined packet to the wireless transmitter (103, 102), and wherein the wireless transmitter further comprises assessment means (1702a, 1802a, 1902a) adapted to obtain the at least one current TCP congestion control parameter from the packet and to forward the parameter to the second storage means (1701c, 1801d, 1901d).

18. The communication system according to claim 16 or 17, wherein the wireless transmitter (1700) comprises data processing means (1702c) adapted to perform a TCP throughput optimization algorithm on the basis of the updated wireless channel model to evaluate a set of transmission power levels as a function of the round number, the phase and the initial window size of a predefined TCP transmission cycle and which is further adapted to store the set of transmission power levels in a third storage means (1701d).

19. The communication system according to claim 16 or 17, wherein the wireless transmitter (1800) comprises a fourth storage means (1801b) storing a plurality of look up tables of transmission power levels each generated with respect to a separate predefined wireless channel model, the updating means (1802b) being adapted to select a look up table of transmission power levels in response to the current wireless channel model, and said determination means (1802c) being adapted to determine in response to the at least one TCP congestion control parameter and the current channel condition of the wireless link the transmission power level from the selected look up table.

20. The communication system according to claim 16 or 17, wherein the wireless transmitter (1900) comprises fourth storage means (1901b) storing a plurality of predefined transmission power control functions which approximate the target segment success probabilities minimizing a predetermined cost-to-go-function, wherein by said cost-to-go function the cost to be incurred from a round of a TCP transmission cycle to the end of said transmission cycle is estimated, each transmission power control function generated with respect to a separate wireless channel model, the updating means (1902b) being adapted to select a stored transmission power control function in response to the current wireless channel model, and said determination means (1902c) being adapted to evaluate in response to the at least one TCP congestion control parameter, the current channel condition of the wireless link and the selected transmission power control function the transmission power level.

21. The communication system according to any one of the claims 16 to 20, wherein the wireless channel model stored in the first storage means represents slow fading and fast fading behaviour of a wireless link.

22. A storage medium having stored a set of instructions therein which, when executed by a control unit, adapt said control unit to perform a method according to any one of the claims 1 to 15.

23. The storage medium according to claim 22, wherein the storage medium is implementable in a wireless transmitter suitable for a communication system according to any one of the claims 16 to 21.

**Patentansprüche**

1. Verfahren zur Optimierung des Durchsatzes eines Flusses von TCP-Segmenten, die von einer TCP-Quelle zu einem TCP-Ziel über einen Übertragungsweg übertragen werden, der eine Funkstrecke zwischen einem drahtlosen Sender (1700, 1800, 1900) und einem drahtlosen Empfänger (103, 102; 101a, 101b) umfasst, wobei das Verfahren die folgenden Schritte umfasst:

   a) Bestimmen, in der Transportschicht der TCP-Quelle, mindestens eines aktuellen TCP-Überlastungssteuerungsparameters eines TCP-Überlastungssteuerungsalgorithmus, der von der TCP-Quelle verwendet wird, um mindestens ein TCP-Segment zu übertragen,
   b) Bestimmen, in der Sicherungsschicht des drahtlosen Senders (1700, 1800, 1900), des aktuellen Kanalzustands der Funkstrecke für mindestens ein von dem drahtlosen Sender (1700, 1800, 1900) zu sendendes TCP-Segment,
   c) Übertragen des mindestens einen aktuellen TCP-Überlastungssteuerungsparameters von der Transportschicht der TCP-Quelle an die Sicherungsschicht des drahtlosen Senders (1700, 1800, 1900),
   d) Aktualisieren eines vorgegebenen Funkkanalmodells unter Ansprechen auf den in Schritt b) bestimmten aktuellen Zustand des Funkkanals, wobei das vorgegebene Funkkanalmodell ein Markow-Modell mit N Zuständen ist, wobei jeder der N Zustände einen Kanalverstärkungsfaktor des Funkkanalmodells darstellt, und, unter Ansprechen auf den mindestens einen TCP-Überlastungssteuerungsparameter und den aktuellen Kanalzustand der Funkstrecke und auf Basis des aktuellen Funkkanalmodells, Bestimmen, in der Sicherungsschicht des drahtlosen Senders (1700, 1800, 1900), desjenigen Sendeleistungspegels, bei dem mindestens ein Sicherungsschicht-Rahmen, der mindestens einen Teil eines TCP-Segments enthält, über die Funkstrecke an den drahtlosen Empfänger (103, 102; 101a, 101b) übertragen werden soll.

2. Verfahren nach Anspruch 1, wobei eine Änderung der Größe des TCP-Überlastungsfensters während eines TCP-Übertragungszyklus durch einen TCP-Überlastungssteuerungsalgorithmus gesteuert wird, wobei jeder TCP-Übertragungszyklus durch eine Anzahl von Runden und eine anfängliche Fenstergröße definiert ist, wobei der TCP-Überlastungssteuerungsparameter die aktuelle Rundenzahl und Informationen zur aktuellen Phase des Zyklus beinhaltet, und wobei Schritt d) folgende Schritte umfasst:

   d1) Auswerten eines Satzes von Sendeleistungspegeln als Funktion von der Rundenzahl, der anfänglichen Fenstergröße und der Phase des TCP-Übertragungszyklus durch Ausführung eines TCP-Durchsatzoptimierungsalgorithmus auf Basis des aktualisierten Funkkanalmodells,
   d2) Speichern des ausgewerteten Satzes von Sendeleistungspegeln, der Rundenzahlen, der anfänglichen Fenstergröße, der Phase und des Funkkanalzustands, und

d3) Auswählen des Sendeleistungspegels aus dem gespeicherten Satz in Ansprechen auf die aktuellen TCP-Überlastungssteuerungsparameter und den aktuellen Kanalzustand.

3. Verfahren nach Anspruch 2, wobei der TCP-Überlastungssteuerungsalgorithmus der TCP-Congestion-Avoidance-Algorithmus ist und der TCP-Übertragungszyklus eine additive Erhöhung und eine Timeout-Phase umfasst.

4. Verfahren nach Anspruch 2 oder 3, wobei der TCP-Durchsatzoptimierungsalgorithmus über eine dynamische Programmierungsprozedur mit endlicher Periode gelöst wird, und wobei Schritt d1) folgende Schritte umfasst:

- Bestimmen, für jede Runde eines TCP-Übertragungszyklus, der Soll-Erfolgswahrscheinlichkeit, dass TCP-Segmente während der jeweiligen Runde gesendet werden, durch Minimieren einer vorgegebenen Cost-to-go-Funktion für jede Runde eines TCP-Übertragungszyklus, wobei mit der Cost-to-go-Funktion die in der entsprechenden Runde bis zum Ende eines Übertragungszyklus anfallenden Kosten geschätzt werden, und
- Umsetzen der jeweiligen Soll-Erfolgswahrscheinlichkeit in den entsprechenden Sendeleistungspegel, und wobei das Verfahren ferner den folgenden Schritt umfasst:
- Senden des Sicherungsschicht-Rahmens, der mindestens einen Teil eines TCP-Segments enthält, über die Funkstrecke an den drahtlosen Empfänger, wodurch der TCP-Durchsatz optimiert wird.

5. Verfahren nach Anspruch 4, wobei die Soll-Erfolgswahrscheinlichkeit jeweils unter Nutzung von Parametern der physikalischen Schicht und der Sicherungsschicht des drahtlosen Senders (1700, 1800, 1900) in den entsprechenden Sendeleistungspegel umgesetzt wird.

6. Verfahren nach einem der Ansprüche 1 bis 5, wobei der Kanalzustand der Funkstrecke durch einen Kanalverstärkungsfaktor der Funkstrecke dargestellt wird.

7. Verfahren nach einem der Ansprüche 1 bis 6, wobei ein Kanalverstärkungsfaktor, der in dem Funkkanalmodell verwendet wird, während jeder Runde eines TCP-Zyklus auf den gleichen Wert gesetzt wird.

8. Verfahren nach einem der Ansprüche 1 bis 7, wobei Sendeleistungskosten gemittelt über eine Kanalverstärkungsverteilung ausgewertet werden und in dem Funkkanalmodell verwendet werden.

9. Verfahren nach einem der Ansprüche 1 bis 5, wobei die Schritte a) bis d) jedes Mal ausgeführt werden, wenn ein Sicherungsschicht-Rahmen, der mindestens einen Teil eines TCP-Segments enthält, übertragen werden soll.

10. Verfahren nach Anspruch 1, wobei eine Mehrzahl von unterschiedlichen Funkkanalmodellen und TCP-Übertragungszyklen vorgesehen werden, wobei für jedes Funkkanalmodell und für jeden TCP-Übertragungszyklus ein Satz von Sendeleistungspegeln für Sicherungsschicht-Rahmen, die mindestens einen Teil eines TCP-Segments enthalten, durch Ausführen eines TCP-Durchsatzoptimierungsalgorithmus ausgewertet werden und dann gespeichert werden, wobei Schritt d) folgende Schritte umfasst:

- Auswählen eines Satzes von Sendeleistungspegeln unter Ansprechen auf das aktualisierte Funkkanalmodell, und
- unter Ansprechen auf die aktualisierten TCP-Überlastungssteuerungsparameter und den aktuellen Kanalzustand der Funkstrecke, Auswählen desjenigen Sendeleistungspegels aus dem Satz von Sendeleistungspegeln, bei dem der Sicherungsschicht-Rahmen, der mindestens einen Teil eines TCP-Segments enthält, über die Funkstrecke an den drahtlosen Empfänger (103, 102; 101a, 101b) übertragen werden soll.

11. Verfahren nach Anspruch 1, wobei eine Mehrzahl von unterschiedlichen Funkkanalmodellen vorgesehen werden, wobei für jedes Funkkanalmodell eine Leistungssteuerungsheuristik vorgegeben und gespeichert wird, wobei Schritt d) folgende Schritte umfasst:

- Auswählen der entsprechenden Heuristik in Ansprechen auf das aktualisierte Funkkanalmodell, und
- unter Ansprechen auf die aktuellen TCP-Überlastungssteuerungsparameter und den aktuellen Kanalzustand der Funkstrecke, Auswerten der ausgewählten Heuristik, um den Sendeleistungspegel zu erhalten, bei welchem der Sicherungsschicht-Rahmen, der mindestens einen Teil eines TCP-Segment enthält, über die Funkstrecke an den drahtlosen Empfänger (103, 102; 101a, 101b) übertragen werden soll.

12. Verfahren nach einem der Ansprüche 1 bis 11, wobei der Übertragungsweg einen drahtgebundenen Weg umfasst.

13. Verfahren nach Anspruch 12, wobei die TCP-Quelle der drahtlose Sender ist, der drahtlose Empfänger eine Basisstation (103) oder ein Zugangspunkt (102) ist und das TCP-Ziel den drahtgebundenen Weg abschließt.

14. Verfahren nach Anspruch 12, wobei die TCP-Quelle den drahtgebundenen Weg abschließt, der drahtlose Empfänger ein mobiles Gerät (101a, 101b) ist und der drahtlose Sender eine Basisstation (103) oder ein Zugangspunkt (102) ist, wobei die durch die TCP-Quelle in Schritt a) bestimmten aktuellen TCP-Überlastungssteuerungsparameter an die Sicherungsschicht des drahtlosen Senders übertragen werden.

15. Verfahren nach einem der Ansprüche 12 bis 14, wobei der drahtgebundene Weg zum Internet oder einem Lokalnetz gehört, und wobei die Funkstrecke Teil eines Mobilfunknetz oder eines drahtlosen Lokalnetzes ist.

16. Kommunikationssystem (100) zur Optimierung des Durchsatzes eines Flusses von TCP-Segmenten, die von einer TCP-Quelle (104; 101a, 101b) zu einem TCP-Ziel (104; 101a, 101b) über einen Übertragungsweg übertragen werden, der eine Funkstrecke zwischen einem drahtlosen Sender (1700, 1800, 1900) und einem drahtlosen Empfänger (103, 102; 101a, 101b) umfasst, wobei das Kommunikationssystem einen drahtlosen Sender umfasst, wobei der drahtlose Sender umfasst:

    - eine Bitübertragungsschicht (1703, 1803, 1903), die dafür ausgebildet ist, über die Funkstrecke Informationen zu dem aktuellen Kanalzustand der Funkstrecke zu empfangen,
    - erste Speichermittel (1701a, 1801a, 1901a), in denen ein vorgegebenes Funkkanalmodell gespeichert ist, wobei das vorgegebene Funkkanalmodell ein Markow-Modell mit N Zuständen ist, wobei jeder der N Zustände einen Kanalverstärkungsfaktor des Funkkanalmodells darstellt,
    - zweite Speichermittel (1701d, 1801d, 1901d), in denen mindestens ein aktueller TCP-Überlastungssteuerungsparameter aus einem TCP-Überlastungssteuerungsalgorithmus gespeichert ist, der von der TCP-Quelle genutzt wird, um mindestens ein TCP-Segment zu übertragen,
    - Aktualisierungsmittel (1702b, 1802b, 1902b), die dafür ausgebildet sind, unter Ansprechen auf die Informationen zum aktuellen Kanalzustand der Funkstrecke das Funkkanalmodell zu aktualisieren, und
    - Bestimmungsmittel (1702d, 1802c, 1902c), die dafür ausgebildet sind, unter Ansprechen auf den mindestens einen TCP-Überlastungssteuerungsparameter und den aktuellen Kanalzustand der Funkstrecke und auf Basis des aktuellen Funkkanalmodells den Sendeleistungspegel zu bestimmen, bei dem mindestens ein Sicherungsschicht-Rahmen, der mindestens einen Teil eines TCP-Segments enthält, über die Funkstrecke an den drahtlosen Empfänger übertragen werden soll.

17. Kommunikationssystem nach Anspruch 16, das ferner einen Übertragungsweg, eine TCP-Quelle und einen drahtlosen Empfänger umfasst, wobei der Übertragungsweg einen drahtgebundenen Weg umfasst, wobei die TCP-Quelle (104) an den drahtgebundenen Weg angeschlossen ist, wobei der drahtlose Empfänger ein mobiles Gerät (101a, 101b) ist und der drahtlose Sender eine Basisstation (103) oder ein Zugangspunkt (102) ist, wobei die TCP-Quelle (104) dafür ausgebildet ist, den mindestens einen aktuellen TCP-Überlastungssteuerungsparameter eingebettet in ein vorgegebenes Paket zu dem drahtlosen Sender (103, 102) zu übertragen, und wobei der drahtlose Sender ferner Auswertemittel (1702a, 1802a, 1902a) umfasst, die dafür ausgebildet sind, den mindestens einen TCP-Überlastungssteuerungsparameter aus dem Paket zu erhalten und den Parameter an die zweiten Speichermittel (1701c, 1801d, 1901d) weiterzuleiten.

18. Kommunikationssystem nach Anspruch 16 oder 17, wobei der drahtlose Sender (1700) Datenverarbeitungsmittel (1702c) umfasst, die dafür ausgebildet sind, einen TCP-Durchsatzoptimierungsalgorithmus auf Basis des aktualisierten Funkkanalmodells auszuführen, um einen Satz von Sendeleistungspegeln auszuwerten, und zwar in Abhängigkeit von der Rundenzahl, der Phase und der anfänglichen Fenstergröße eines vorgegebenen TCP-Übertragungszyklus, und die weiter dafür ausgebildet sind, den Satz von Sendeleistungspegeln in einem dritten Speichermittel (1701d) zu speichern.

19. Kommunikationssystem nach Anspruch 16 oder 17, wobei der drahtlose Sender (1800) ein viertes Speichermittel umfasst (1801b) umfasst, in dem eine Mehrzahl von Nachschlagetabellen mit Sendeleistungspegeln gespeichert sind, die jeweils mit Bezug auf ein separates vorgegebenes Funkkanalmodell erzeugt werden, wobei die Aktualisierungsmittel (1802b) dafür ausgebildet sind, unter Ansprechen auf das aktuelle Funkkanalmodell eine Nachschlagetabelle mit Sendeleistungspegeln auszuwählen, und wobei die Bestimmungsmittel (1802c) dafür ausgebildet sind, unter Ansprechen auf den mindestens einen TCP-Überlastungssteuerungsparameter und den aktuellen Ka-

EP 1 914 952 B1

nalzustand der Funkstrecke den Sendeleistungspegel aus der ausgewählten Nachschlagetabelle zu bestimmen.

20. Kommunikationssystem nach Anspruch 16 oder 17, wobei der drahtlose Sender (1900) ein viertes Speichermittel (1901b) umfasst, in dem eine Mehrzahl von vordefinierten Steuerfunktionen für die Sendeleistung gespeichert sind, welche die Soll-Erfolgswahrscheinlichkeiten für ein Segment annähern, wobei eine vorgegebene Cost-to-go-Funktion minimiert wird, wobei durch die Cost-to-go-Funktion die Kosten, die für eine Runde eines TCP-Übertragungszyklus bis zum Ende des Übertragungszyklus anfallen, geschätzt werden, wobei die Steuerfunktionen für die Sendeleistung jeweils in Bezug auf ein separates Funkkanalmodell erzeugt werden, wobei die Aktualisierungsmittel (1902b) dafür ausgebildet sind, unter Ansprechen auf das aktuelle Funkkanalmodell eine gespeicherte Steuerfunktion für die Sendeleistung auszuwählen, und wobei die Bestimmungsmittel (1902c) dafür ausgebildet sind, unter Ansprechen auf den mindestens einen TCP-Überlastungssteuerungsparameter, den aktuellen Kanalzustand der Funkstrecke und die gewählte Steuerfunktion für die Sendeleistung, den Sendeleistungspegel zu bewerten.

21. Kommunikationssystem nach einem der Ansprüche 16 bis 20, wobei das in den ersten Speichermitteln gespeicherte Funkkanalmodell langsames Fading-Verhalten und schnelles Fading-Verhalten einer Funkstrecke darstellt.

22. Speichermedium, in welchem ein Satz von Anweisungen gespeichert ist, die, wenn sie durch eine Steuereinheit ausgeführt werden, die Steuereinheit dazu anpassen, ein Verfahren nach einem der Ansprüche 1 bis 15 auszuführen.

23. Speichermedium nach Anspruch 22, wobei das Speichermedium in einem drahtlosen Sender implementierbar ist, der für ein Kommunikationssystem nach einem der Ansprüche 16 bis 21 geeignet ist.


**Revendications**

1. Procédé pour optimiser le débit d'un flux de segments TCP qui est transféré d'une source TCP à une destination TCP sur un trajet de transmission qui comprend une liaison sans fil entre un transmetteur sans fil (1700, 1800, 1900) et un récepteur sans fil (103, 102 ; 101a, 101b), ledit procédé comprenant les étapes consistant à :

a) déterminer, au niveau de la couche transport de la source TCP, au moins un paramètre de contrôle d'encombrement TCP actuel d'un algorithme de contrôle d'encombrement TCP utilisé par la source TCP pour transmettre au moins un segment TCP ;
b) déterminer, au niveau de la couche liaison de données du transmetteur sans fil (1700, 1800, 1900), la condition de canal actuelle de la liaison sans fil pour au moins un segment TCP devant être transmis par le transmetteur sans fil (1700, 1800, 1900) ;
c) transférer le au moins un paramètre de contrôle d'encombrement TCP actuel de la couche transport de la source TCP à la couche liaison de données du transmetteur sans fil (1700, 1800, 1900) ;
d) mettre à jour un modèle de canal sans fil prédéterminé en réponse à la condition de canal sans fil actuelle déterminée à l'étape b), où le modèle de canal sans fil prédéterminé est un modèle markovien à N états, chacun des N états représentant un facteur de gain de canal du modèle de canal sans fil, et en réponse au au moins un paramètre de contrôle d'encombrement TCP et à la condition de canal actuelle de la liaison sans fil, et sur la base du modèle de canal sans fil actuel, déterminer, au niveau de la couche liaison de données du transmetteur sans fil (1700, 1800, 1900), le niveau de puissance de transmission, auquel au moins une trame de couche liaison de données contenant au moins une partie d'un segment TCP doit être transmise sur la liaison sans fil au récepteur sans fil (103, 102 ; 101a, 101b).

2. Procédé selon la revendication 1, dans lequel une variation de la taille de fenêtre d'encombrement TCP au cours d'un cycle de transmission TCP est contrôlée par un algorithme de contrôle d'encombrement de TCP, chaque cycle de transmission TCP étant défini par un nombre de tours et une taille de fenêtre initiale, dans lequel le paramètre de contrôle d'encombrement TCP inclut le nombre de tours actuel et des informations sur la phase actuelle du cycle, et dans lequel l'étape d) comprend les étapes consistant à :

d1) Evaluer un ensemble de niveaux de puissance de transmission en fonction du nombre de tours, de la taille de fenêtre initiale et de la phase d'un cycle de transmission TCP en exécutant un algorithme d'optimisation de débit TCP sur la base du modèle de canal sans fil mis à jour,
d2) Stocker l'ensemble évalué de niveaux de puissance de transmission, les nombres de tours, la taille de fenêtre initiale, la phase et la condition de canal sans fil, et
d3) Sélectionner à partir de l'ensemble stocké le niveau de puissance de transmission en réponse aux paramètres de contrôle d'encombrement TCP actuels à la condition de canal actuelle.

3.  Procédé selon la revendication 2, dans lequel l'algorithme de contrôle d'encombrement TCP est l'algorithme d'évitement d'encombrement TCP et le cycle de transmission TCP comprend une augmentation additive et une phase de temporisation.

4.  Procédé selon la revendication 2 ou 3, dans lequel l'algorithme d'optimisation de débit TCP est résolu via une procédure de programmation dynamique à période finie et dans lequel l'étape d1) comprend les étapes suivantes :

    - déterminer pour chaque tour d'un cycle de transmission TCP la probabilité de réussite de cible pour des segments TCP devant être transmis au cours du tour respectif en minimisant une fonction cost-to-go (coût restant) prédéterminée pour chaque tour d'un cycle de transmission TCP, où par ladite fonction cost-to-go le coût devant être encouru à partir du tour respectif jusqu'à la fin d'un cycle de transmission est estimé, et
    - convertir chaque probabilité de réussite de cible au niveau de puissance de transmission correspondant, et où le procédé comprend en outre l'étape suivante :
    - transmettre la trame de couche liaison de données contenant au moins une partie d'un segment TCP sur la liaison sans fil au récepteur sans fil, optimisant ainsi le débit TCP.

5.  Procédé selon la revendication 4, dans lequel chaque probabilité de réussite de cible est convertie au niveau de puissance de transmission correspondant en utilisant des paramètres de couche physique et de couche liaison de données du transmetteur sans fil (1700, 1800, 1900).

6.  Procédé selon l'une quelconque des revendications 1 à 5, dans lequel la condition de canal de la liaison sans fil est représentée par un facteur de gain de canal de la liaison sans fil.

7.  Procédé selon l'une quelconque des revendications 1 à 6, dans lequel un facteur de gain de canal utilisé dans le modèle de canal sans fil est établi à la même valeur au cours de chaque tour d'un cycle TCP.

8.  Procédé selon l'une quelconque des revendications 1 à 7, dans lequel un coût de puissance de transmission moyenné sur une distribution de gain de canal est évalué et utilisé dans le modèle de canal sans fil.

9.  Procédé selon l'une quelconque des revendications 1 à 5, dans lequel les étapes a) à d) sont effectuées chaque fois qu'une trame de couche liaison de données contenant au moins une partie d'un segment TCP doit être transmise.

10. Procédé selon la revendication 1, dans lequel une pluralité de modèles de canal sans fil différents et de cycles de transmission TCP sont pourvus, dans lequel pour chaque modèle de canal sans fil et pour chaque cycle de transmission TCP, un ensemble de niveaux de puissance de transmission pour des trames de couche liaison de données contenant au moins une partie d'un segment TCP sont évalués en exécutant un algorithme d'optimisation de débit TCP et ensuite stockés, dans lequel l'étape d) comprend les étapes suivantes :

    - sélectionner en réponse au modèle de canal sans fil mis à jour un ensemble de niveaux de puissance de transmission, et
    - sélectionner, en réponse aux paramètres de contrôle d'encombrement TCP actuels et à la condition de canal actuelle de la liaison sans fil, parmi l'ensemble de niveaux de puissance de transmission le niveau de puissance de transmission auquel la trame de couche liaison de données contenant au moins une partie d'un segment TCP doit être transmise sur la liaison sans fil au récepteur sans fil (103, 102 ; 101a, 101b).

11. Procédé selon la revendication 1, dans lequel une pluralité de modèles de canal sans fil différents sont pourvus, dans lequel pour chaque modèle de canal sans fil une heuristique de contrôle de puissance est prédéterminée et stockée, dans lequel l'étape d) comprend les étapes suivantes :

    - sélectionner en réponse au modèle de canal sans fil mis à jour l'heuristique correspondante, et
    - évaluer en réponse aux paramètres de contrôle d'encombrement TCP actuels et à la condition de canal actuelle de la liaison sans fil l'heuristique sélectionnée pour obtenir le niveau de puissance de transmission auquel la trame de couche liaison de données contenant au moins une partie d'un segment TCP doit être transmise sur la liaison sans fil au récepteur sans fil (103, 102 ; 101a, 101b).

12. Procédé selon l'une quelconque des revendications 1 à 11, dans lequel le trajet de transmission comprend un trajet filaire.

13. Procédé selon la revendication 12, dans lequel la source TCP est le transmetteur sans fil, le récepteur sans fil est une station de base (103) ou un point d'accès (102) et la destination TCP termine le trajet filaire.

14. Procédé selon la revendication 12, dans lequel la source TCP termine le trajet filaire, le récepteur sans fil est un dispositif mobile (101a, 101b) et le transmetteur sans fil est une station de base (103) ou un point d'accès (102), dans lequel les paramètres de contrôle d'encombrement TCP actuels déterminés par la source TCP à l'étape a) sont transmis à la couche liaison de données du transmetteur sans fil.

15. Procédé selon l'une quelconque des revendications 12 à 14, dans lequel le trajet filaire appartient à Internet ou à un réseau local et dans lequel la liaison sans fil fait partie d'un réseau mobile ou d'un réseau local sans fil.

16. Système de communication (100) pour optimiser le débit d'un flux de segments TCP qui est transféré d'une source TCP (104 ; 101a, 101b) à une destination TCP (104 ; 101a, 101b) sur un trajet de transmission qui comprend une liaison sans fil entre un transmetteur sans fil (1700, 1800, 1900) et un récepteur sans fil (103, 102 ; 101a, 101b), le système de communication comprenant un transmetteur sans fil, ledit transmetteur sans fil comprenant :

   une couche physique (1703, 1803, 1903) adaptée pour recevoir sur ladite liaison sans fil des informations de la condition de canal actuelle de la liaison sans fil,
   un premier moyen de stockage (1701a, 1801a, 1901a) stockant un modèle de canal sans fil prédéfini, où le modèle de canal sans fil prédéfini est un modèle markovien à N états, chacun des N états représentant un facteur de gain de canal du modèle de canal sans fil,
   un deuxième moyen de stockage (1701d, 1801d, 1901d) stockant au moins un paramètre de contrôle d'encombrement TCP actuel d'un algorithme de contrôle d'encombrement TCP utilisé par la source TCP pour transmettre au moins un segment TCP,
   un moyen de mise à jour (1702b, 1802b, 1902b) adapté pour mettre à jour le modèle de canal sans fil en réponse aux informations de la condition de canal actuelle de la liaison sans fil et
   un moyen de détermination (1702d, 1802c, 1902c) adapté pour déterminer en réponse au au moins un paramètre de contrôle d'encombrement TCP et à la condition de canal actuelle de la liaison sans fil, et sur la base du modèle de canal sans fil actuel, le niveau de puissance de transmission, auquel au moins une trame de couche liaison de données contenant au moins une partie d'un segment TCP doit être transmise sur la liaison sans fil au récepteur sans fil.

17. Système de communication selon la revendication 16, comprenant en outre un trajet de transmission, une source TCP et un récepteur sans fil, dans lequel le trajet de transmission comprend un trajet filaire, ladite source TCP (104) étant connectée au trajet filaire, le récepteur sans fil étant un dispositif mobile (101a, 101b) et le transmetteur sans fil étant une station de base (103) ou un point d'accès (102), ladite source TCP (104) étant adaptée pour transmettre le au moins un paramètre de contrôle d'encombrement TCP actuel incorporé dans un paquet prédéterminé au transmetteur sans fil (103, 102), et dans lequel le transmetteur sans fil comprend en outre un moyen d'estimation (1702a, 1802a, 1902a) adapté pour obtenir le au moins un paramètre de contrôle d'encombrement TCP actuel à partir du paquet et pour réexpédier le paramètre au deuxième moyen de stockage (1701c, 1801d, 1901d).

18. Système de communication selon la revendication 16 ou 17, dans lequel le transmetteur sans fil (1700) comprend un moyen de traitement de données (1702c) adapté pour exécuter un algorithme d'optimisation de débit TCP sur la base du modèle de canal sans fil mis à jour pour évaluer un ensemble de niveaux de puissance de transmission en fonction du nombre de tours, de la phase et de la taille de fenêtre initiale d'un cycle de transmission TCP prédéfini et qui est en outre adapté pour stocker l'ensemble de niveaux de puissance de transmission dans un troisième moyen de stockage (1701d).

19. Système de communication selon la revendication 16 ou 17, dans lequel le transmetteur sans fil (1800) comprend un quatrième moyen de stockage (1801b) stockant une pluralité de tables de consultation de niveaux de puissance de transmission chacune générée par rapport à un modèle de canal sans fil prédéfini distinct, le moyen de mise à jour (1802b) étant adapté pour sélectionner une table de consultation de niveaux de puissance de transmission en réponse au modèle de canal sans fil actuel, et ledit moyen de détermination (1802c) étant adapté pour déterminer en réponse au au moins un paramètre de contrôle d'encombrement TCP et à la condition de canal actuelle de la liaison sans fil le niveau de puissance de transmission à partir de la table de consultation sélectionnée.

**20.** Système de communication selon la revendication 16 ou 17, dans lequel le transmetteur sans fil (1900) comprend un quatrième moyen de stockage (1901b) stockant une pluralité de fonctions de contrôle de puissance de transmission prédéfinies qui approximent les probabilités de réussite de segment cible en minimisant une fonction cost-to-go prédéterminée, dans lequel par ladite fonction cost-to-go le coût devant être encouru à partir d'un tour d'un cycle de transmission TCP jusqu'à la fin dudit cycle de transmission est estimé, chaque fonction de contrôle de puissance de transmission générée par rapport à un modèle de canal sans fil distinct, le moyen de mise à jour (1902b) étant adapté pour sélectionner une fonction de contrôle de puissance de transmission stockée en réponse au modèle de canal sans fil actuel, et ledit moyen de détermination (1902c) étant adapté pour évaluer en réponse au au moins un paramètre de contrôle d'encombrement TCP, à la condition de canal actuelle de la liaison sans fil et à la fonction de contrôle de puissance de transmission sélectionnée le niveau de puissance de transmission.

**21.** Système de communication selon l'une quelconque des revendications 16 à 20, dans lequel le modèle de canal sans fil stocké dans le premier moyen de stockage représente un comportement d'évanouissement lent et d'évanouissement rapide d'une liaison sans fil.

**22.** Support de stockage dans lequel est stocké un jeu d'instructions qui, lorsqu'il est exécuté par une unité de contrôle, adapte ladite unité de contrôle pour effectuer un procédé selon l'une quelconque des revendications 1 à 15.

**23.** Support de stockage selon la revendication 22, dans lequel le support de stockage peut être mis en oeuvre dans un transmetteur sans fil approprié pour un système de communication selon l'une quelconque des revendications 16 à 21.

**Figure 1**

Figure 2

300

Retrieve the round number r, target success probability s, channel gain g, cost ratio λ initial window size $W_{init}$, future cost J(r+1), and timeout cost T(r+2, r) for the current evaluation — S301

Retrieve the PHY and link-layer system parameters — S302

Evaluate success probability of the round as $s^{Wr}$ — S305

Evaluate the probability of triple duplicate loss indication $p_{TD}(r, s)$ — S307

Evaluate transmission power P(s, g) — S303

Evaluate cost of the last round $C_L(r,s,g)$ as P x Wr/2 — S308

Evaluate $C_B(r)$ — S309

Evaluate cost contribution in case of triple duplicate loss as $p_{TD}(r, s)$ x $(C_L(r,s,g)+C_B(r))$ — S310

Evaluate cost contribution in case of timeout as $(1-p_{TD}(r, s))$ x T(r+2,r) — S311

Sum the above ascertained costs to yield $C_{Loss}(r, s, g)$ — S312

Evaluate transmission power cost of the present round as $W_r$ x P(s, g) — S304

Evaluate future cost as $s^{Wr}$ x J(r+1) — S306

Evaluate the cost in case of loss in the current round as $(1-s^{Wr})$ x $C_{Loss}(r, s, g)$ — S313

Sum the above ascertained costs to yield the cost $C_{round}(r, s, g)$ — S314

Figure 3

400

S401

Retrieve r, λ, $W_{init}$, J(r+1), T(r+2, r) for the current evaluation

S402

Set J(r) to 0 and initialize s and g

S403

Evaluate and record $C_{round}$ (r, s, g) for current r, s, g, λ, $W_{init}$, J(r+1), T(r+2, r)

S404

Has $C_{round}$ been evaluated for all values of s and a given g?

S405

Select the next value of s

← No

Yes

S406

Determine s = s* that corresponds to the minimum value of $C_{round}$ (r, s, g) for a given g

S407

Record s* for current r, λ, g, $W_{init}$

S408

Evaluate $P_g(g)$ using the channel model

S409

Increment J(r) by $C_{round}$ (r, s*, g)$P_g(g)$

S410

Has the evaluation been done for all values of g

S411

Select the next value of g

← No

Yes

S412

Record J(r)

Figure 4

500

Retrieve the target success probability s, channel gain g, the round r after which the timeout phase begins, the initial window size **Winit**, cost ratio $\lambda$ and future cost **T(k+1, r)** for the current evaluation — S501

Retrieve the PHY and link-layer system parameters — S502

Evaluate transmission power cost **P(s,g)** of the current round — S503

Evaluate future cost **(1-s) x T(k+1,r)** corresponding to the loss of the segment — S504

Evaluate the terminal cost as **s x C$_{TO}$(k,r)** corresponding to the success of the transmitted segment — S505

Sum the above ascertained costs to yield the cost **T$_{round}$(k, r, s, g)** — S506

Figure 5

600

Retrieve r, **Winit** and λ — S601

Set **T(k,r)** to 0 and initialize s and g — S602

Evaluate and record $T_{round}(k, r, s, g)$ for current r, s, g, $W_{Init}$ and λ — S603

Has $T_{round}$ been evaluated for all values of s and a given g? — S604

Select the next value of s — S605

No

Yes

Determine s*=s that corresponds to the minimum value of $T_{round}(k, r, s, g)$ for a given g. — S606

Record s* for the current k, r, , λ, g, $W_{Init}$. — S607

Evaluate $P_g(g)$ using the channel model — S608

Increment T(k, r) by $T_{round}(k, r, s*, g)P_g(g)$ — S609

Has the evaluation been done for all values of g — S610

Select the next value of g — S611

No

Yes

Record T(k, r) — S612

Figure 6

700

Initialize $R_t$ and $K_t$ — S701

Initialize cost ratio $\lambda$ — S702

Initialize $W_{init}$ to 1 — S703

Initialize r to $R_t$ and $J(R_t+1)$ to 0 — S704

Execute method 400, evaluate $J(r)$ with parameters $\lambda$, $W_{init}$, $J(r+1)$, $T(r+2, r)$ — S705

Initialize k to $r+1+K_t$ and $T(k+1, r)$ to 0 — S706

Execute method 600 and evaluate $T(k, r)$ with parameters $\lambda$, $W_{init}$, $T(k+1, r)$ — S707

Decrease k by 1 — S708

Is k>r+1 — S709
No

Yes

Decrease r by 1 — S710

Is r > 0 — S711
No

Yes

Increase $W_{init}$ by 1 — S712

Is $W_{init}>W_{max}$ — S713
No

Yes

S715
Select the next value of $\lambda$

No

Has the evaluation been done for all values of $\lambda$? — S714

Yes

Stop — S716

Figure 7

31

800

S801

Retrieve the round number r, target success probability s, channel gain g, cost ratio λ initial window size $W_{init}$, future cost J(r+1), and timeout cost T(r+2, r) for the current evaluation

S802

Retrieve the channel model and PHY and link-layer system parameters

S805

Evaluate success probability of the round as $s^{Wr}$

S807

Evaluate the probability of triple duplicate loss indication $p_{TD}(r,s)$

S803

Evaluate transmission power cost averaged over channel gain distribution as $\overline{P}(s) =$

$$\int_g P(s,g)f_\Omega(g)dg$$

S808

Evaluate cost of the last round $C_L(r, s)$ as $\overline{P}(s) \times Wr/2$

S809

Evaluate $C_B(r)$

S810

Evaluate cost contribution in case of triple duplicate loss as $p_{TD}(r, s) \times (C_L(r, s)+C_B(r))$

S811

Evaluate cost contribution in case of timeout as $(1-p_{TD}(r,s)) \times T(r+2,r)$

S804

Evaluate transmission power cost averaged over the channel gain distribution $\overline{P}(s) \times Wr$

S806

Evaluate future cost as $s^{Wr} \times J(r+1)$

S812

Sum the above ascertained costs to yield $C_{Loss}(r, s)$

S813

Evaluate the cost in case of loss in the current round as $(1-s^{Wr}) \times C_{Loss}(r, s)$

S814

Sum the above ascertained costs to yield the cost $C_{round}(r, s)$

Figure 8

900

Retrieve $r$, $\lambda$, $W_{init}$, $J(r+1)$, $T(r+1, r)$ for the current evaluation —— S901

Set $J(r)$ to 0 and initialize $s$ —— S902

Evaluate and record $C_{round}(r, s)$ for $r$, $s$, $\lambda$, $W_{init}$, $J(r+1)$, $T(r+1, r)$ —— 903

S905 Select the next value of $s$

S904 Has $C_{round}$ been evaluated for all values of $s$ ?

Determine $s^* = s$ that corresponds to the minimum value of $C_{round}(r, s)$ —— S906

Record $s^*$ for current $r$, $\lambda$, $W_{init}$ —— S907

Set $J(r)$ to $C_{round}(r, s^*)$ —— S908

Record $J(r)$ —— S909

Figure 9

1000

S1001

Retrieve the target success probability s, the round r after which the timeout phase begins, the initial window size $W_{init}$, cost ratio $\lambda$ and future cost T(k+1,r) for the current evaluation

S1002

Retrieve the channel model and PHY and link-layer system parameters

S1003

Evaluate transmission power cost averaged over channel gain distribution as $\overline{P}(s) =$

$$\int_g P(s,g) f_g(g) dg$$

S1004

Evaluate future cost (1-s) x T(k+1, r) corresponding to the loss of the segment

S1005

Evaluate the terminal cost as s x $C_{TO}$(k, r) corresponding to the success of the transmitted segment

S1006

Sum the above ascertained costs to yield the cost $T_{round}$(k, r, s)

Figure 10

34

1100

Retrieve **r**, $\mathbf{W_{init}}$ and $\lambda$ — S1101

Set $T(k, r)$ to $0$ and initialize s — S1102

Evaluate and record $\mathbf{T_{round}}(k, r, s)$ for current **r**, s, $\mathbf{W_{init}}$ and $\lambda$ — S1103

S1105
Select the next value of s

S1104
Has $\mathbf{T_{round}}$ been evaluated for all values of s ?

Determine s=s* that corresponds to the minimum value of $T_{round}(k, r, s)$ — S1106

Record s* for the current k, **r**, , $\lambda$, $\mathbf{W_{init}}$ — S1107

Set $T(k,r)$ to $T_{round}(k, r, s^*)$ — S1108

Record $T(k, r)$ — S1109

Figure 11

1200

S1201

Ascertain the round number and phase information for the TCP segments

S1202

Tunnel the round number and phase information with the segments

S1203

Deliver the segments to the IP layer

Figure 12

1300

S1301

Identify the protocol to which IP datagram data belongs by parsing the protocol field in the datagram

S1302

No — Is Protocol = TCP?

S1304

Ascertain the power level at which the frame encapsulating the IP datagram should be transmitted via the link-layer power control scheme

Yes — S1303

Parse the segment round number and phase information tunnelled by the transport layer in the TCP segment encapsulated in the IP datagram

S1305

Make the TCP dynamics information accessible to the TCP throughput optimizing system (e.g. 1700, 1800 or 1900) that determines with this information and with the assistance of method 1400 or 1500 or 1600, the power level at which the frame encapsulating the IP datagram should be transmitted.

Figure 13

1400

S1401

Parse the channel-state information available from the link-layer

S1402

Update the channel model

S1403

Perform dynamic programming based optimization for the updated channel model to yield target segment success probability look up tables

S1404

Convert the target segment success probability look up tables to power control look up tables utilizing the physical and link layer parameters of the wireless system

S1405

Store the look-up table results at a location accessible for the determination of transmission power level for the link-layer frames encapsulating TCP segments.

Figure 14

1500

S1501

Parse the channel-state information available from the link-layer

S1502

Update the channel model

S1503

Retrieve the power control look-up table for the updated channel model.

S1504

Make the retrieved look-up table accessible for the determination of transmission power level for the link-layer frames encapsulating TCP segments.

Figure 15

1600

S1601

Parse the channel-state information available from the link-layer

S1602

Update the channel model

S1603

Ascertain a heuristic suitable for the updated channel model

S1604

Make the heuristic accessible for the determination of transmission power level for the link-layer frames encapsulating the TCP segments

Fig. 16

1700

**Storage**                                                    1701b

**Fast Access Memory** 1701d                                    1701

1701a

| Channel Model | TCP flow Dynamics State | Power Control Look-up Table |
|---|---|---|

1701c

1702                                                            1702d

1702a              1702b              1702c

| TCP Flow Dynamics Assessment | Channel Model Update | Dynamic Programming Optimization and Power Control Evaluation | Transmission Power level Determination |
|---|---|---|---|

**Processing**

1703

**Wireless Interface**

Figure 17

1800

**Storage**

1801b

Power Control
Look up Tables
for all Channel
Models

1801c

**Fast Access Memory** 1801e

1801d

1801

Power
Control
Look-up
Table

1801a Channel
Model

TCP flow
Dynamics
State

1802b 1802a 1802c

Channel
Model
Update

TCP Flow
Dynamics
Assessment

Transmission
Power level
Determination

1802

**Processing**

**Wireless Interface** 1803

Figure 18

1900

**Storage**

1901b

Power Control
Heuristics for
all Channel
Models

**Fast Access Memory** 1901e 1901c

1901d

Power
Control
Heuristic

1901

1901a

Channel
Model

TCP flow
Dynamics
State

1902b

1902a

1902c

Channel
Model
Update

TCP Flow
Dynamics
Assessment

Transmission
Power level
Evaluation

1902

**Processing**

1903

**Wireless Interface**

Figure 19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2005025084 A1

### Non-patent literature cited in the description

- A Comparison of Mechanisms for Improving TCP Performance over Wireless Links. **BALAKRISHNAN et al.** IEEE/ACM Transactions on Networking. 1998
- **ARAUZ et al.** MAITE: A Scheme for Improving the Performance of TCP over Wireless Channels. *IEEE Vehicular Technology Conference,* 2001
- **MIYOSHI et al.** Performance Evaluation of TCP Throughput on Wireless Cellular Networks. *IEEE Vehicular Technology Conference,* 2001
- **BROWN et al.** M-TCP: TCP for Mobile Cellular Networks. *ACM SIGCOMM Computer Communications Review,* 1997
- **BALAKRISHNAN et al.** Improving TCP/IP Performance over Wireless Networks. *ACM MobiCom,* 1995
- **LAURA et al.** An Analytical Study of a Trade-off between Transmission Power and FEC for TCP Optimization in Wireless Networks. *IEEE INFOCOM,* 2003
- **BARMAN et al.** TCP Optimization through FEC, ARQ, and Transmission Power Trade-offs. *International Conference on Wired/Wireless Internet Communications,* 2004
- Channel state awareness based transmission power adaptation for efficient TCP dynamics in wireless networks. *2005 IEEE International Conference on Communications in Seoul,* 16 May 2005
- **PAXSON et al.** TCP Congestion Control. *IETF For Comments,* April 1999, 2581
- **BERTIKAS.** Dynamic Programming and Optimal Control. Athena Scientific, 2001